# EUROPEAN PATENT APPLICATION

(11) **EP 2 849 255 A1**
(43) Date of publication of application: **18.03.2015**
(21) Application number: 14183953.0
(22) Date of filing: 08.09.2014
(51) Int. Cl.: H01M 2/10, H01M 10/04, H01M 10/0562

(54) **Lithium-ion secondary battery, and method of producing the same**

(30) Priority: 13.09.2013 JP 2013190448
(71) Applicant: Kojima Industries Corporation, Toyota-shi, Aichi 471-0875 (JP)
(72) Inventor: Noguchi, Masumi, Aichi-ken, Aichi 471-0875 (JP)
(74) Representative: Smith, Matthew

(57) **Abstract**

A small-sized lithium-ion secondary battery which can be produced at a low cost with a high degree of productivity and which has high degrees of output density and cell performance. The lithium-ion secondary battery includes a plurality of laminar sheets 16 laminated on each other. Each laminar sheet 16 includes a positive electrode sheet 12 consisting of a positive electrode active substance layer 20 and a first solid electrolyte layer 24 laminated integrally on each of the opposite surfaces of a positive electrode collector foil 18, and a negative electrode sheet 14 consisting of a negative electrode active substance layer 28 and a second solid electrolyte layer 32 laminated integrally on each of the opposite surfaces of a negative electrode collector foil 26.

## Description

### TECHNICAL FIELD

The present invention relates in general to a lithium-ion secondary battery, and a method of producing the same, and more particularly to improvements of an all solid type lithium-ion secondary battery, and a method which permits advantageous production of the lithium-ion secondary battery.

### BACKGROUND ART

A lithium-ion secondary battery having a high energy density is widely used as an electric power source in portable electronic devices such as notebook personal computers and cellular or mobile phones. This lithium-ion secondary battery is generally classified into two kinds, namely, a lithium-ion secondary battery using a liquid-type electrolyte (including a liquid electrolyte and a gel-type electrolyte), and a so-called all solid type lithium-ion secondary battery using a solid electrolyte. Of these two kinds of lithium-ion secondary battery, the all solid type lithium-ion secondary battery does not have a risk of liquid leakage and firing, and has a higher degree of safety, unlike the lithium-ion secondary battery using the liquid-type electrolyte. In favor of this advantage, there have been growing developments in the field of the all solid-type lithium-ion secondary battery, expecting a further increased demand for the all solid-type lithium-ion secondary battery.

Japanese Patent No. 3852169 (Patent Document 1) discloses an example of a lithium-ion secondary battery which is produced by forming: a positive electrode active substance layer in the form of an organic polymer coating layer containing a positive electrode active substance, on a positive electrode collector foil; a negative electrode active substance layer in the form of an organic polymer coating layer containing a negative electrode active substance, on a negative electrode collector foil; and a solid electrolyte layer in the form of an organic polymer coating layer containing a lithium salt, such that the positive and negative electrode active substance layers are superposed on the respective opposite surfaces of the solid electrolyte layer.

In the lithium-ion secondary battery configured as described above, the positive electrode active substance layer, the negative electrode active substance layer and the solid electrolyte layer are all constituted by the organic polymer films. Accordingly, these positive and negative electrode active substance layers and the solid electrolyte layer exhibit an adequate degree of flexibility or plasticity, and an accordingly high degree of bending or flexural strength.

In this lithium-ion secondary battery, however, the positive and negative electrode active substance layers and the solid electrolyte layer are coating layers, which have thicknesses not smaller than several tens of µm, so that there is a limitation in the amount of reduction of the thicknesses of the positive and negative electrode active substance layers and the solid electrolyte layer in an effort to reduce the overall size of the lithium-ion secondary battery and to improve its output density. Further, the production of the lithium-ion secondary battery requires an additional device for drying the positive and negative electrode active substance layers and the solid electrolyte layer, which are formed in a wet process, so that the cost of production is undesirably increased. In addition, an extra time is required for drying the positive and negative electrode active substance layers and the solid electrolyte layer after these layers are formed, so that the required cycle time of production of each lithium-ion secondary battery is necessarily prolonged, giving rise to a problem of low productivity of the battery.

Further, the lithium-ion secondary battery disclosed in the above-identified publication has the following drawbacks due to its structure wherein the positive and negative electrode active substance layers formed separately from the solid electrolyte layer are merely laminated on the respective opposite surfaces of the solid electrolyte layer.

Namely, the above-described lithium-ion secondary battery wherein the positive electrode active substance layer and the negative electrode active substance layer are superposed or laminated on the solid electrolyte layer inevitably has gaps between the solid electrolyte layer and the positive and negative electrode active substance layers, posing a problem that the gaps prevent smooth movement or transportation of lithium ions between the positive electrode active substance layer and the solid electrolyte layer, and between the negative electrode active substance layer and the solid electrolyte layer. The negative and positive electrode active substance layers may be formed by a thermal bonding process, integrally with the solid electrolyte layer. In this case, too, however, the gaps between the solid electrolyte layer and the positive and negative electrode active substance layers cannot be completely eliminated, that is, extremely minute gaps preventing the movement of the lithium ions still remain between the solid electrolyte layer and the positive and negative electrode active substance layers.

Accordingly, the prior art lithium-ion secondary battery in which the positive and negative electrode active substance layers and the solid electrolyte layer which have been formed separately from each other are laminated on each other suffers from a high degree of interface resistance between the solid electrolyte layer and the positive and negative electrode active substance layers, which is a big barrier to an improvement of performance of the battery.

### PRIOR ART DOCUMENT

### PATENT DOCUMENT

Patent Document 1: Japanese Patent No. 3852169

### SUMMARY OF THE INVENTION

### TECHNICAL PROBLEMS

The present invention was made in view of the background art described above. It is therefore a first object of the present invention to provide a lithium-ion secondary battery which is configured to permit effective improvement of its output density and effective reduction of its size, and sufficient improvement of its performance owing to reduction of an interface resistance between its solid electrolyte layer and its positive and negative electrode active substance layers, and which can be produced at a minimum cost and with a high degree of productivity. A second object of the invention is to provide a method which permits efficient production of a lithium-ion secondary battery having such excellent properties.

### SOLUTION TO PROBLEMS

The first object indicated above can be achieved according to a first aspect of this invention, which provides a lithium-ion secondary battery comprising a plurality of laminar sheets each of which includes a positive electrode sheet and a negative electrode sheet which are laminated on each other, wherein the positive electrode sheet has a positive electrode in which a positive electrode active substance layer in the form of a vapor-deposited polymer film containing a positive electrode active substance is laminated integrally on each of opposite surfaces of a positive electrode collector foil in the form of a metallic foil, while a first solid electrolyte layer in the form of a vapor-deposited polymer film having lithium-ion conductivity is disposed on each of opposite sides of the positive electrode such that the first solid electrolyte layer is laminated integrally on the corresponding positive electrode active substance layer, and wherein the negative electrode sheet has a negative electrode in which a negative electrode active substance layer in the form of a vapor-deposited polymer film containing a negative electrode active substance is laminated integrally on each of opposite surfaces of a negative electrode collector foil in the form of a metallic foil, while a second solid electrolyte layer in the form of a vapor-deposited polymer film having lithium-ion conductivity is disposed on each of opposite sides of the negative electrode such that the second solid electrolyte layer is laminated integrally on the corresponding negative electrode active substance layer.

The first object can also be achieved according to a second aspect of this invention, which provides a lithium-ion secondary battery comprising a plurality of laminar sheets each including two electrode sheets which are laminated on each other and each of which has a bipolar electrode in which a positive electrode active substance layer in the form of a vapor-deposited polymer film containing a positive electrode active substance is laminated integrally on one of opposite surfaces of a collector foil in the form of a metallic foil, while a negative electrode active substance layer in the form of a vapor-deposited polymer film containing a negative electrode active substance is laminated integrally on the other of the opposite surfaces of the collector foil, and wherein a first solid electrolyte layer and a second solid electrolyte layer in the form of vapor-deposited polymer films each having lithium-ion conductivity are disposed on respective opposite sides of the bipolar electrode such that the first solid electrolyte layer is laminated integrally on the positive electrode active substance layer, while the second solid electrolyte layer is laminated integrally on the negative electrode active substance layer.

In a preferred form of the lithium-ion secondary battery of the invention, each of the vapor-deposited polymer film constituting the positive electrode active substance layer and the vapor-deposited polymer film constituting the negative electrode active substance layer has ion conductivity.

In another preferred form of the lithium-ion secondary battery of the invention, each of the vapor-deposited polymer film constituting the positive electrode active substance layer and the vapor-deposited polymer film constituting the negative electrode active substance layer has electron conductivity.

In a further preferred form of the lithium-ion secondary battery of the invention, a positive-electrode-side mixture layer is formed between the positive electrode active substance layer and the first solid electrolyte layer. The positive-electrode-side mixture layer is formed of a mixture of a first polymer used to form the vapor-deposited polymer film constituting the positive electrode active substance layer, and a second polymer used to form the first solid electrolyte layer. A content of the first polymer in the positive-electrode-side mixture layer gradually decreases in a direction from the positive electrode active substance layer toward the first solid electrolyte layer, while a content of the second polymer in the positive-electrode-side mixture layer gradually increases in the direction from the positive electrode active substance layer toward the first solid electrolyte layer.

In a yet further preferred form of the lithium-ion secondary battery of the invention, a negative-electrode-side mixture layer is formed between the negative electrode active substance layer and the second solid electrolyte layer. The negative-electrode-side mixture layer is formed of a mixture of a third polymer used to form the vapor-deposited polymer film constituting the negative electrode active substance layer, and a fourth polymer used to form the second solid electrolyte layer. A content of the third polymer in the negative-electrode-side mixture layer gradually decreases in a direction from the negative electrode active substance layer toward the second solid electrolyte layer, while a content of the fourth polymer in the negative-electrode-side mixture layer gradually increases in the direction from the negative electrode active substance layer toward the second solid electrolyte layer.

In a still further preferred form of the lithium-ion secondary battery of the invention, each of the first solid electrolyte layer and the second solid electrolyte layer is constituted by a vapor-deposited polymer film containing a lithium salt and having ion conductivity.

Where each of the first solid electrolyte layer and the second solid electrolyte layer is constituted by a vapor-deposited polymer film containing a lithium salt and having ion conductivity, contents of lithium ions and anions derived from the lithium salt existing within the first and second solid electrolyte layers are adjusted in the following manner.

Namely, the content of the lithium ions is higher in a thickness portion of the first solid electrolyte layer adjacent to the positive electrode active substance layer, than in the other thickness portion of the first solid electrolyte layer remote from the positive electrode active substance layer, and in a thickness portion of the second solid electrolyte layer adjacent to the negative electrode active substance layer, than in the other thickness portion of the second solid electrolyte layer remote from the negative electrode active substance layer, while the content of the anions is higher in the above-described other thickness portion of the first solid electrolyte layer, and in the above-described other thickness portion of the second solid electrolyte layer.

Further, only the thickness portion of the first solid electrolyte layer adjacent to the positive electrode active substance layer, and only the thickness portion of the second solid electrolyte layer adjacent to the negative electrode active substance layer are formed of a polymer having a functional group which includes an element of high electronegativity which attracts the lithium ions derived from the lithium salt contained in the first and second solid electrolyte layers, toward the thickness portions of the first and second solid electrolyte layers respectively adjacent to the positive and negative electrode active substance layers, for uneven distribution of the lithium ions in the first and second solid electrolyte layers.

The second object indicated above can be achieved according to a second aspect of this invention, which provides a method of producing a lithium-ion secondary battery, comprising the steps of (a) preparing a positive electrode collector foil in the form of a metallic foil, and laminating positive electrode active substance layers in the form of vapor-deposited polymer films each containing a positive electrode active substance, integrally on respective opposite surfaces of the positive electrode collector foil, (b) laminating first solid electrolyte layers in the form of vapor-deposited polymer films each having lithium-ion conductivity, on surfaces of the positive electrode active substance layers remote from the positive electrode collector foil, (c) preparing a negative electrode collector foil in the form of a metallic foil, and laminating negative electrode active substance layers in the form of vapor-deposited polymer films each containing a negative electrode active substance, integrally on respective opposite surfaces of the negative electrode collector foil, (d) laminating second solid electrolyte layers in the form of vapor-deposited polymer films each having lithium-ion conductivity, on surfaces of the negative electrode active substance layers remote from the negative electrode collector foil, to thereby form a positive electrode sheet in which the positive electrode active substance layers are laminated integrally on the respective opposite surfaces of the positive electrode collector foil, and the first solid electrolyte layers are laminated integrally on the surfaces of the positive electrode active substance layers remote from the positive electrode collector foil, and a negative electrode sheet in which the negative electrode active substance layers are laminated integrally on the respective opposite surfaces of the negative electrode collector foil, and the second solid electrolyte layers are laminated integrally on the surfaces of the negative electrode active substance layers remote from the negative electrode collector foil, and (e) laminating a plurality of laminar sheets on each other, each of the laminar sheets including the positive electrode sheet and the negative electrode sheet which are superposed on each other.

In a preferred form of the method of the invention, a plurality of segments of each of the positive electrode active substance layers are laminated integrally on each of opposite surfaces of a tape of the positive electrode collector foil such that the plurality of segments are spaced apart from each other by a predetermined spacing distance in a direction of length of the tape, to form the positive electrode sheet in which each of the opposite surfaces of the positive electrode collector foil is provided with active-substance-free portions each formed between the adjacent segments of the positive electrode active substance layer, and a plurality of segments of each of the negative electrode active substance layers are laminated integrally on each of opposite surfaces of a tape of the negative electrode collector foil such that the plurality of segments are spaced apart from each other by the predetermined spacing distance in a direction of length of the tape of the negative electrode collector foil, to form the negative electrode sheet in which each of the opposite surfaces of the negative electrode collector foil is provided with active-substance-free portions each formed between the adjacent segments of the negative electrode active substance layer, and wherein the positive electrode sheet and the negative electrode sheet are superposed on each other such that the active-substance-free portions of the positive and negative electrode sheets are aligned with each other, to form a laminar body which is cut into the plurality of laminar sheets, at positions of the tapes of the positive and negative electrode collector foils corresponding to the respective active-substance-free portions.

In another preferred form of the method of the invention, the positive electrode active substance layer consisting of a first vapor-deposited polymer film containing the positive electrode active substance is formed integrally on each of the opposite surfaces of the positive electrode collector foil, by introducing the positive electrode active substance into the first vapor-deposited polymer film while the first vapor-deposited polymer film is formed by a vapor-deposition polymerization process on each of the opposite surfaces of the positive electrode collector foil.

In a further preferred form of the method of the invention, the negative electrode active substance layer consisting of a second vapor-deposited polymer film containing the negative electrode active substance is formed integrally on each of the opposite surfaces of the negative electrode collector foil, by introducing the negative electrode active substance into the second vapor-deposited polymer film while the second vapor-deposited polymer film is formed by a vapor-deposition polymerization process on each of the opposite surfaces of the negative electrode collector foil.

In a still further preferred form of the method of the invention, the first solid electrolyte layer consisting of a third vapor-deposited polymer film containing an ion conductivity rendering substance is formed integrally on a surface of the positive electrode active substance layer remote from the positive electrode collector foil, by introducing the ion conductivity rendering substance including a lithium salt into the third vapor-deposited polymer film while the third vapor-deposited polymer film is formed by a vapor-deposition polymerization process on the surface of the positive electrode active substance layer remote from the positive electrode collector foil.

In a yet further preferred form of the method of the invention, the second solid electrolyte layer consisting of a fourth vapor-deposited polymer film containing an ion conductivity rendering substance is formed integrally on a surface of the negative electrode active substance layer remote from the negative electrode collector foil, by introducing the ion conductivity rendering substance including a lithium salt into the fourth vapor-deposited polymer film while the fourth vapor-deposited polymer film is formed by a vapor-deposition polymerization process on the surface of the negative electrode active substance layer remote from the negative electrode collector foil.

The second object indicated above can also be achieved according to a fourth aspect of the present invention, which provides a method of producing a lithium-ion secondary battery, comprising the steps of (a) preparing a collector foil in the form of a metallic foil, (b) forming a positive electrode active substance layer in the form of a vapor-deposited polymer film containing a positive electrode active substance, integrally on one of opposite surfaces of the collector foil, (c) forming a negative electrode active substance layer in the form of a vapor-deposited polymer film containing a negative electrode active substance, integrally on the other of the opposite surfaces of the collector foil, (d) forming a first solid electrolyte layer in the form of a vapor-deposited polymer film having lithium-ion conductivity, integrally on a surface of the positive electrode active substance layer remote from the collector foil, (e) forming a second solid electrolyte layer in the form of a vapor-deposited polymer film having lithium-ion conductivity, integrally on a surface of the negative electrode active substance layer remote from the collector foil, to thereby form an electrode sheet in which the positive electrode active substance layer and the first solid electrolyte layer are laminated integrally on the above-described one of the opposite surfaces of the collector foil, while the negative electrode active substance layer and the second solid electrolyte layer are laminated integrally on the above-described other of the opposite surfaces of the collector foil, and (f) laminating a plurality of laminar sheets on each other, each of the laminar sheets including two electrode sheets which are superposed on each other and each of which consists of the above-described electrode sheet.

In a preferred form of the method according to the fourth aspect of the invention, a plurality of segments of the positive electrode active substance layer are laminated integrally on the above-described one of the opposite surfaces of a tape of the collector foil such that the plurality of segments are spaced apart from each other by a predetermined spacing distance in a direction of length of the tape, while a plurality of segments of the negative electrode active substance layer are laminated integrally on the above-described other of the opposite surfaces of the tape of the collector foil such that the plurality of segments are spaced apart from each other by the predetermined spacing distance in the direction of length of the tape, to form the above-described electrode sheet in which the above-described one of the opposite surfaces of the collector foil is provided with active-substance-free portions each formed between the adjacent segments of the positive electrode active substance layer, while the above-described other of the opposite surfaces of the collector foil is provided with active-substance-free portions each formed between the adjacent segments of the negative electrode active substance layer, and wherein the above-described two electrode sheets are superposed on each other such that the active-substance-free portions between the adjacent segments of the positive electrode active substance layer, and the active-substance-free portions between the adjacent segments of the negative electrode active substance layer are aligned with each other, to form a laminar body which is cut into the plurality of laminar sheets, at positions of the tape of the collector foil corresponding to the respective active-substance-free portions.

In another preferred form of the method according to the fourth aspect of the invention, the positive electrode active substance layer consisting of a first vapor-deposited polymer film containing the positive electrode active substance is formed integrally on the above-described one of the opposite surfaces of the collector foil, by introducing the positive electrode active substance into the first vapor-deposited polymer film while the first vapor-deposited polymer film is formed by a vapor-deposition polymerization process on the above-described one of the opposite surfaces of the collector foil.

In a further preferred form of the method according to the fourth aspect of the invention, the negative electrode active substance layer consisting of a second vapor-deposited polymer film containing the negative electrode active substance is formed integrally on the above-described other of the opposite surfaces of the collector foil, by introducing the negative electrode active substance into the second vapor-deposited polymer film while the second vapor-deposited polymer film is formed by a vapor-deposition polymerization process on the above-described other of the opposite surfaces of the collector foil.

In a still further preferred form of the method according to the fourth aspect of the invention, the first solid electrolyte layer consisting of a third vapor-deposited polymer film containing an ion conductivity rendering substance is laminated integrally on a surface of the positive electrode active substance layer remote from the collector foil, by introducing the ion conductivity rendering substance including a lithium salt into the third vapor-deposited polymer film while the third vapor-deposited polymer film is formed by a vapor-deposition polymerization process on the surface of the positive electrode active substance layer remote from the collector foil.

In a yet further preferred form of the method according to the fourth aspect of the invention, the second solid electrolyte layer consisting of a fourth vapor-deposited polymer film containing an ion conductivity rendering substance is laminated integrally on a surface of the negative electrode active substance layer remote from the collector foil, by introducing the ion conductivity rendering substance including a lithium salt into the fourth vapor-deposited polymer film while the fourth vapor-deposited polymer film is formed by a vapor-deposition polymerization process on the surface of the negative electrode active substance layer remote from the collector foil.

In another preferred form of the method according to the fourth aspect of the invention, the positive electrode active substance is introduced into the first vapor-deposited polymer film by blowing the positive electrode active substance dispersed in a first carrier gas, onto the first vapor-deposited polymer film while the first vapor-deposited polymer film is formed.

In a further preferred form of the method according to the fourth aspect of the invention, the negative electrode active substance is introduced into the second vapor-deposited polymer film by blowing the negative electrode active substance dispersed in a second carrier gas, onto the second vapor-deposited polymer film while the second vapor-deposited polymer film is formed.

In a still further preferred form of the method according to the fourth aspect of the invention, each of the first and second vapor-deposited polymer films has ion conductivity.

In a yet further preferred form of the method according to the fourth aspect of the invention, each of the first and second vapor-deposited polymer films has electron conductivity.

Where each of the first and second solid electrolyte layers is constituted by a vapor-deposited polymer film containing a lithium salt and having ion conductivity, contents of lithium ions and anions derived from the lithium salt existing within the first and second solid electrolyte layers are adjusted in the following manner.

Namely, before lamination of the above-described positive and negative electrode sheets or the above-described two electrode sheets, a processing operation to unevenly distribute the lithium ions derived from the lithium salt contained in the first solid electrolyte layer is performed such that the content of the lithium ions is higher in a thickness portion of the first solid electrolyte layer adjacent to the positive electrode active substance layer, than in the other thickness portion of the first solid electrolyte layer remote from the positive electrode active substance layer, while the content of the anions is higher in the above-described other thickness portion of the first solid electrolyte layer, and a processing operation to unevenly distribute the lithium ions derived from the lithium salt contained in the second solid electrolyte layer is performed such that the content of the lithium ions is higher in a thickness portion of the second solid electrolyte layer adjacent to the negative electrode active substance layer, than in the other thickness portion of the second solid electrolyte layer remote from the negative electrode active substance layer, while the content of the anions is higher in the above-described other thickness portion of the second solid electrolyte layer.

Further, only the thickness portion of the third vapor-deposited polymer film of the first solid electrolyte layer adjacent to the positive electrode active substance layer, and only the thickness portion of the fourth vapor-deposited polymer film of the second solid electrolyte layer adjacent to the negative electrode active substance layer are formed of a polymer having a functional group which includes an element of high electronegativity which attracts the lithium ions derived from the lithium salt contained in the first and second solid electrolyte layers, toward the thickness portions of the first and second solid electrolyte layers respectively adjacent to the positive and negative electrode active substance layers, for uneven distribution of the lithium ions in the first and second solid electrolyte layers.

Further, the lithium ion conductivity rendering substance to be introduced into the third vapor-deposited polymer film of the first solid electrolyte layer consists of only the lithium salt, and the third vapor-deposited polymer film contains an ion-conductive polymer. The lithium salt is introduced into the third vapor-deposited polymer film containing the ion-conductive polymer, by blowing the lithium salt dispersed in a third carrier gas, onto the third vapor-deposited polymer film while the third vapor-deposited polymer film is formed.

Alternatively, the lithium ion conductivity rendering substance to be introduced into the third vapor-deposited polymer film of the first solid electrolyte layer consists of an ion-conductive polymer in a liquid state in which the lithium salt is dissolved. Particles of the ion-conductive polymer in the liquid state in which the lithium salt is dissolved are introduced into the third vapor-deposited polymer film, by blowing a mist of the particles dispersed in a fourth carrier gas, onto the third vapor-deposited polymer film while the third vapor-deposited polymer film is formed.

Further, the lithium ion conductivity rendering substance to be introduced into the fourth vapor-deposited polymer film of the second solid electrolyte layer consists of only the lithium salt, and the fourth vapor-deposited polymer film contains an ion-conductive polymer. The lithium salt is introduced into the fourth vapor-deposited polymer film containing the ion-conductive polymer, by blowing the lithium salt dispersed in a fifth carrier gas, onto the fourth vapor-deposited polymer film while the fourth vapor-deposited polymer film is formed.

Alternatively, the lithium ion conductivity rendering substance to be introduced into the fourth vapor-deposited polymer film of the second solid electrolyte layer consists of an ion-conductive polymer in a liquid state in which the lithium salt is dissolved. Particles of the ion-conductive polymer in the liquid state in which the lithium salt is dissolved are introduced into the fourth vapor-deposited polymer film, by blowing a mist of the particles dispersed in a sixth carrier gas, onto the fourth vapor-deposited polymer film while the fourth vapor-deposited polymer film is formed.

Further, the method of producing the lithium-ion secondary battery comprises: a step of forming the positive electrode active substance layer integrally on one of the opposite surfaces of the positive electrode collector foil by introducing the positive electrode active substance into the first vapor-deposited polymer film while the first vapor-deposited polymer film is formed on the above-described one of the opposite surfaces of the positive electrode collector foil, by introducing vapors of a plurality of kinds of material for the positive electrode active substance layer, into an evacuated reaction chamber accommodating the positive electrode collector foil, and polymerizing the vapors; and a step of forming the first solid electrolyte layer integrally on the surface of the positive electrode active substance layer remote from the positive electrode collector foil, by introducing the lithium ion conductivity rendering substance into the third vapor-deposited polymer film while the third vapor-deposited polymer film is formed on the positive electrode active substance layer by introducing vapors of a plurality of kinds of material for the first solid electrolyte layer, into the evacuated reaction chamber, and polymerizing the vapors, after a predetermined length of time has passed after a moment of initiation of the step of forming the positive electrode active substance layer, and wherein amounts of introduction of the vapors of the plurality of kinds of material for the positive electrode active substance layer into the reaction chamber are gradually reduced to zero after a moment of initiation of introduction of the vapors of the plurality of kinds of material for the first solid electrolyte layer into the reaction chamber, so that the polymerization of the vapors of the plurality of kinds of material for the positive electrode active substance layer and the polymerization of the vapors of the plurality of kinds of material for the first solid electrolyte layer take place concurrently, whereby a positive-electrode-side mixture layer consisting of a mixture of a product produced by the polymerization of the vapors of the plurality of kinds of material for the positive electrode active substance layer and a product produced by the polymerization of the vapors of the plurality of kinds of material for the first solid electrolyte layer is formed on the positive electrode active substance layer before the first solid electrolyte layer is formed.

The method of producing the lithium-ion secondary battery further comprises: a step of forming the negative electrode active substance layer integrally on one of the opposite surfaces of the negative electrode collector foil, by introducing the negative electrode active substance into the second vapor-deposited polymer film while the second vapor-deposited polymer film is formed on the above-described one of the opposite surfaces of the negative electrode collector foil by introducing vapors of a plurality of kinds of material for the negative electrode active substance layer, into the evacuated reaction chamber also accommodating the negative electrode collector foil, and polymerizing the vapors; and a step of forming the second solid electrolyte layer integrally on the surface of the negative electrode active substance layer remote from the negative electrode collector foil, by introducing the lithium ion conductivity rendering substance into the fourth vapor-deposited polymer film while the fourth vapor-deposited polymer film is formed on the negative electrode active substance layer by introducing vapors of a plurality of kinds of material for the second solid electrolyte layer, into the evacuated reaction chamber, and polymerizing the vapors, after a predetermined length of time has passed after a moment of initiation of the step of forming the negative electrode active substance layer, and wherein amounts of introduction of the vapors of the plurality of kinds of material for the negative electrode active substance layer into the reaction chamber are gradually reduced to zero after a moment of initiation of introduction of the vapors of the plurality of kinds of material for the second solid electrolyte layer into the reaction chamber, so that the polymerization of the vapors of the plurality of kinds of material for the negative electrode active substance layer and the polymerization of the vapors of the plurality of kinds of material for the second solid electrolyte layer take place concurrently, whereby a negative-electrode-side mixture layer consisting of a mixture of a product produced by the polymerization of the vapors of the plurality of kinds of material for the negative electrode active substance layer and a product produced by the polymerization of the vapors of the plurality of kinds of material for the second solid electrolyte layer is formed on the negative electrode active substance layer before the second solid electrolyte layer is formed.

Further, the method of producing the lithium-ion secondary battery comprises: a step of forming the positive electrode active substance layer integrally on one of the opposite surfaces of the collector foil, by introducing the positive electrode active substance into the first vapor-deposited polymer film while the first vapor-deposited polymer film is formed on the above-described one of the opposite surfaces of the collector foil by introducing vapors of a plurality of kinds of material for the positive electrode active substance layer, into an evacuated reaction chamber accommodating the collector foil, and polymerizing the vapors; and a step of forming the first solid electrolyte layer integrally on the surface of the positive electrode active substance layer remote from the collector foil, by introducing the lithium ion conductivity rendering substance into the third vapor-deposited polymer film while the third vapor-deposited polymer film is formed on the positive electrode active substance layer by introducing vapors of a plurality of kinds of material for the first solid electrolyte layer, into the evacuated reaction chamber, and polymerizing the vapors, after a predetermined length of time has passed after a moment of initiation of the step of forming the positive electrode active substance layer, and wherein amounts of introduction of the vapors of the plurality of kinds of material for the positive electrode active substance layer into the reaction chamber are gradually reduced to zero after a moment of initiation of introduction of the vapors of the plurality of kinds of material for the first solid electrolyte layer into the reaction chamber, so that the polymerization of the vapors of the plurality of kinds of material for the positive electrode active substance layer and the polymerization of the vapors of the plurality of kinds of material for the first solid electrolyte layer take place concurrently, whereby a positive-electrode-side mixture layer consisting of a mixture of a product produced by the polymerization of the vapors of the plurality of kinds of material for the positive electrode active substance layer and a product produced by the polymerization of the vapors of the plurality of kinds of material for the first solid electrolyte layer is formed on the positive electrode active substance layer before the first solid electrolyte layer is formed.

The method of producing the lithium-ion secondary battery further comprises: a step of forming the negative electrode active substance layer integrally on the other of the opposite surfaces of the collector foil, by introducing the negative electrode active substance into the second vapor-deposited polymer film while the second vapor-deposited polymer film is formed on the above-described other of the opposite surfaces of the collector foil by introducing vapors of a plurality of kinds of material for the negative electrode active substance layer, into the evacuated reaction chamber accommodating the collector foil, and polymerizing the vapors; and a step of forming the second solid electrolyte layer integrally on the surface of the negative electrode active substance layer remote from the collector foil, by introducing the lithium ion conductivity rendering substance into the fourth vapor-deposited polymer film while the fourth vapor-deposited polymer film is formed on the negative electrode active substance layer by introducing vapors of a plurality of kinds of material for the second solid electrolyte layer, into the evacuated reaction chamber, and polymerizing the vapors, after a predetermined length of time has passed after a moment of initiation of the step of forming the negative electrode active substance layer, and wherein amounts of introduction of the vapors of the plurality of kinds of material for the negative electrode active substance layer into the reaction chamber are gradually reduced to zero after a moment of initiation of introduction of the vapors of the plurality of kinds of material for the second solid electrolyte layer into the reaction chamber, so that the polymerization of the vapors of the plurality of kinds of material for the negative electrode active substance layer and the polymerization of the vapors of the plurality of kinds of material for the second solid electrolyte layer take place concurrently, whereby a negative-electrode-side mixture layer consisting of a mixture of a product produced by the polymerization of the vapors of the plurality of kinds of material for the negative electrode active substance layer and a product produced by the polymerization of the vapors of the plurality of kinds of material for the second solid electrolyte layer is formed on the negative electrode active substance layer before the second solid electrolyte layer is formed.

The lithium-ion secondary battery according to the present invention is preferably produced by a production apparatus comprising (a) a vacuum chamber, (b) evacuating means for exhausting air from the vacuum chamber to thereby evacuate the vacuum chamber, (c) positive electrode collector foil supplying means for continuously supplying a tape of a positive electrode collector foil in the form of a metallic foil, within the vacuum chamber, (d) negative electrode collector foil supplying means for continuously supplying a tape of a negative electrode collector foil in the form of a metallic foil, within the vacuum chamber, (e) a positive electrode sheet forming unit configured to form a positive electrode sheet by integrally laminating a positive electrode active substance layer in the form of a vapor-deposited polymer film containing a positive electrode active substance, and a first solid electrolyte layer in the form of a vapor-deposited polymer film having lithium-ion conductivity, in this order of description within the vacuum chamber, on each of opposite surfaces of the tape of the positive electrode collector foil supplied from the positive electrode collector foil supplying means, (f) a negative electrode sheet forming unit configured to form a negative electrode sheet by integrally laminating a negative electrode active substance layer in the form of a vapor-deposited polymer film containing a negative electrode active substance, and a second solid electrolyte layer in the form of a vapor-deposited polymer film having lithium-ion conductivity, in this order of description within the vacuum chamber, on each of opposite surfaces of the tape of the negative electrode collector foil supplied from the negative electrode collector foil supplying means, (g) a laminar sheet forming unit configured to superpose the positive electrode sheet formed by the positive electrode sheet forming unit, and the negative electrode sheet formed by the negative electrode sheet forming unit, on each other within the vacuum chamber, such that the first solid electrolyte layer and the second solid electrolyte layer are superposed on each other, and (h) laminating means for laminating a plurality of laminar sheets each produced by the laminar sheet forming unit, on each other.

In one preferred form of the production apparatus described above, the positive electrode sheet forming unit includes first vapor-deposited polymer film forming means for laminating a first vapor-deposited polymer film by a vapor-deposition polymerization process, integrally on each of the opposite surfaces of the tape of the positive electrode collector foil supplied from the positive electrode collector foil supplying means, and positive electrode active substance introducing means for introducing the positive electrode active substance into the first vapor-deposited polymer film while the first vapor-deposited polymer film is formed by the first vapor-deposited polymer film forming means, the first vapor-deposited polymer film forming means and the positive electrode active substance introducing means cooperating to form the first vapor-deposited polymer film containing the positive electrode active substance, which constitutes the positive electrode active substance layer, the positive electrode sheet forming unit further including second vapor-deposited polymer film forming means for laminating a second vapor-deposited polymer film by a vapor-deposition polymerization process, integrally on the surface of the positive electrode active substance layer remote from the positive electrode collector foil, and lithium salt introducing means for introducing a lithium-ion conductivity rendering substance including a lithium salt, into the second vapor-deposited polymer film while the second vapor-deposited polymer film is formed by the second vapor-deposited polymer film forming means, the second vapor-deposited polymer film forming means and the lithium salt introducing means cooperating to form the second vapor-deposited polymer film containing the lithium-ion conductivity rendering substance, which constitutes the first solid electrolyte layer.

In another preferred form of the production apparatus, the negative electrode sheet forming unit includes third vapor-deposited polymer film forming means for laminating a third vapor-deposited polymer film by a vapor-deposition polymerization process, integrally on each of the opposite surfaces of the tape of the negative electrode collector foil supplied from the negative electrode collector foil supplying means, and negative electrode active substance introducing means for introducing the negative electrode active substance into the third vapor-deposited polymer film while the third vapor-deposited polymer film is formed by the third vapor-deposited polymer film forming means, the third vapor-deposited polymer film forming means and the negative electrode active substance introducing means cooperating to form the third vapor-deposited polymer film containing the negative electrode active substance, which constitutes the negative electrode active substance layer, the negative electrode sheet forming unit further including fourth vapor-deposited polymer film forming means for laminating a fourth vapor-deposited polymer film by a vapor-deposition polymerization process, integrally on the surface of the negative electrode active substance layer remote from the negative electrode collector foil, and lithium salt introducing means for introducing a lithium-ion conductivity rendering substance including a lithium salt, into the fourth vapor-deposited polymer film while the fourth vapor-deposited polymer film is formed by the fourth vapor-deposited polymer film forming means, the fourth vapor-deposited polymer film forming means and the lithium salt introducing means cooperating to form the fourth vapor-deposited polymer film containing the lithium-ion conductivity rendering substance, which constitutes the second solid electrolyte layer.

The lithium-ion secondary battery according to the present invention is also preferably produced by a production apparatus comprising (a) a vacuum chamber, (b) evacuating means for exhausting air from the vacuum chamber to thereby evacuate the vacuum chamber, (c) collector foil supplying means for continuously supplying a tape of a collector foil, within the vacuum chamber, (d) an electrode sheet forming unit configured to form an electrode sheet by integrally laminating a positive electrode active substance layer in the form of a vapor-deposited polymer film containing a positive electrode active substance, and a first solid electrolyte layer in the form of a vapor-deposited polymer film having lithium-ion conductivity, in this order of description within the vacuum chamber, integrally on one of opposite surfaces of the tape of the collector foil supplied from the collector foil supplying means, and integrally laminating a negative electrode active substance layer in the form of a vapor-deposited polymer film containing a negative electrode active substance, and a second solid electrolyte layer in the form of a vapor-deposited polymer film having lithium-ion conductivity, in this order of description within the vacuum chamber, on the other of the opposite surfaces of the tape of the collector foil, (e) a laminar sheet forming unit configured to form a laminar sheet consisting of two electrode sheets each of which is formed by the electrode sheet forming unit and which are superposed on each other within the vacuum chamber, such that the first solid electrolyte layer and the second solid electrolyte layer are superposed on each other, and (f) laminating means for laminating a plurality of laminar sheets each produced by the laminar sheet forming unit, on each other.

In one preferred form of the production apparatus described above, the electrode sheet forming unit includes first vapor-deposited polymer film forming means for laminating a first vapor-deposited polymer film by a vapor-deposition polymerization process, integrally on one of the opposite surfaces of the tape of the collector foil supplied from the collector foil supplying means, and positive electrode active substance introducing means for introducing the positive electrode active substance into the first vapor-deposited polymer film while the first vapor-deposited polymer film is formed by the first vapor-deposited polymer film forming means, the first vapor-deposited polymer film forming means and the positive electrode active substance introducing means cooperating to form the first vapor-deposited polymer film containing the positive electrode active substance, which constitutes the positive electrode active substance layer, the electrode sheet forming unit further including second vapor-deposited polymer film forming means for laminating a second vapor-deposited polymer film by a vapor-deposition polymerization process, integrally on one of the opposite surfaces of the positive electrode active substance layer remote from the collector foil, and lithium salt introducing means for introducing a lithium-ion conductivity rendering substance including a lithium salt, into the second vapor-deposited polymer film while the second vapor-deposited polymer film is formed by the second vapor-deposited polymer film forming means, the second vapor-deposited polymer film forming means and the lithium salt introducing means cooperating to form the second vapor-deposited polymer film containing the lithium-ion conductivity rendering substance, which constitutes the first solid electrolyte layer, the electrode sheet forming unit further including third vapor-deposited polymer film forming means for laminating a third vapor-deposited polymer film by a vapor-deposition polymerization process, integrally on the other of the opposite surfaces of the tape of the collector foil, and negative electrode active substance introducing means for introducing the negative electrode active substance into the third vapor-deposited polymer film while the third vapor-deposited polymer film is formed by the third vapor-deposited polymer film forming means, the third vapor-deposited polymer film forming means and the negative electrode active substance introducing means cooperating to form the third vapor-deposited polymer film containing the negative electrode active substance, which constitutes the negative electrode active substance layer, the electrode sheet forming unit further including fourth vapor-deposited polymer film forming means for laminating a fourth vapor-deposited polymer film by a vapor-deposition polymerization process, integrally on one of the opposite surfaces of the negative electrode active substance layer remote from the collector foil, and lithium salt introducing means for introducing a lithium-ion conductivity rendering substance including a lithium salt, into the fourth vapor-deposited polymer film while the fourth vapor-deposited polymer film is formed by the fourth vapor-deposited polymer film forming means, the fourth vapor-deposited polymer film forming means and the lithium salt introducing means cooperating to form the fourth vapor-deposited polymer film containing the lithium-ion conductivity rendering substance, which constitutes the second solid electrolyte layer.

### ADVANTAGEOUS EFFECTS OF THE INVENTION

The lithium-ion secondary battery according to the first aspect of this invention is configured such that each of the positive electrode active substance layer, the negative electrode active substance layer, the first solid electrolyte layer and the second solid electrolyte layer is constituted by a vapor-deposited polymer film. This vapor-deposited polymer film is formed at a high rate with an extremely small thickness from about several tens of nanometers to about several tens of micrometers, by a vapor-deposition polymerization process, which is a kind of thin-film forming process in vacuum. Accordingly, the present lithium-ion secondary battery wherein each of the positive and negative electrode active substance layers and the first and second solid electrolyte layers is constituted by the vapor-deposited polymer film is free of all drawbacks experienced in a prior art lithium-ion secondary battery in which the positive and negative electrode active substance layers and the first and second solid electrolyte layers are constituted by respective coating layers.

The present lithium-ion secondary battery is further configured such that the first solid electrolyte layer constituted by the vapor-deposited polymer film is laminated integrally on the positive electrode active substance layer, while the second solid electrolyte layer constituted by the vapor-deposited polymer film is laminated integrally on the negative electrode active substance layer, so that gaps which would disturb movements of lithium ions do not exist between the positive electrode active substance layer and the first solid electrolyte layer, and between the negative electrode active substance layer and the second solid electrolyte layer, whereby an interface resistance between the first solid electrolyte layer and the positive electrode active substance layer, and between the second solid electrolyte layer and the negative electrode active substance layer can be effectively reduced. Thus, the present lithium-ion secondary battery advantageously has a considerably improved cell performance.

It is noted that the first solid electrolyte layer of the positive electrode sheet and the second solid electrolyte layer of the negative electrode sheet are superposed on each other, with the lamination of the positive and negative electrode sheets on each other, so that gaps which may disturb the movements of the lithium ions are formed between the first and second solid electrolyte layers. During charging and discharging of the lithium-ion secondary battery, however, substantially no movements of the lithium ions actually take place between the first and second solid electrolyte layers, although the lithium ions move between the positive electrode active substance layer and the first solid electrolyte layer, and between the negative electrode active substance layer and the second solid electrolyte layer. Accordingly, the gaps which may disturb the movements of the lithium ions between the first and second solid electrolyte layers do not actually have any adverse influence on the performance of the lithium-ion secondary battery.

Further, the lithium-ion secondary battery according to the first aspect of this invention includes the mutually laminated plurality of laminar sheets each of which includes the positive electrode sheet including the positive electrode active substance layer and the first solid electrolyte layer laminated integrally on each of the opposite surfaces of the positive electrode collector foil, and the negative electrode sheet including the negative electrode active substance layer and the second solid electrolyte layer laminated integrally on each of the opposite surfaces of the negative electrode collector foil. Therefore, neither the positive electrode collector foils of the positive electrode sheets, nor the negative electrode collector foils of the negative electrode sheets are superposed on each other, with the lamination of the laminar sheets on each other, in the present lithium-ion secondary battery, contrary to the superposition of the positive electrode collector foils on each other and the superposition of the negative electrode collector foils on each other in a lithium-ion secondary battery in which the positive electrode active substance layer and the first solid electrolyte layer are laminated integrally on only one of the opposite surfaces of the positive electrode collector foil while the negative electrode active substance layer and the second solid electrolyte layer are laminated integrally on only one of the opposite surfaces of the negative electrode collector foil. Namely, the present lithium-ion secondary battery do not have two positive electrode collector foils superposed on each other, or two negative electrode collector foils superposed on each other. Accordingly, the required amount of the positive and negative collector foils can be advantageously reduced, and the material cost of the present lithium-ion secondary battery can be effectively reduced.

The lithium-ion secondary battery according to the first aspect of this invention described above has an effectively improved output density and an effectively reduced size, and a sufficiently improved cell performance owing to reduction of the interface resistance between the solid electrolyte layers and the positive and negative electrode active substance layers. In addition, the present lithium-ion secondary battery can be efficiently produced at a minimum cost with a high degree of productivity.

The lithium-ion secondary battery according to the second aspect of the invention has substantially the same operational and physical advantages as the lithium-ion secondary battery according to the first aspect of the invention described above.

The methods of producing a lithium-ion secondary battery according to the third and fourth aspects of this invention described above permit efficient production of the lithium-ion secondary battery at a minimum cost and with a high degree of productivity, so as to assure an effectively improved output density, an effectively reduced size, and a sufficiently improved cell performance owing to reduction of the interface resistance between the solid electrolyte layers and the positive and negative electrode active substance layers.

### BRIEF DESCRIPTION OF THE DRAWINGS

Fig. 1 is an enlarged fragmentary cross sectional view of a lithium-ion secondary battery having a structure according to a first embodiment of the present invention;
Fig. 2 is a cross sectional view of a battery cell formed by using the lithium-ion secondary battery shown in Fig. 1;
Fig. 3 is a schematic view of one example of a production apparatus used to produce the lithium-ion secondary battery shown in Fig. 1;
Fig. 4 is an enlarged view of a portion A indicated in Fig. 3;
Fig. 5 is a view corresponding to that of Fig. 1, showing a lithium-ion secondary battery having a structure according to a second embodiment of the invention;
Fig. 6 is a schematic view of one example of a production apparatus used to produce the lithium-ion secondary battery shown in Fig. 5, according to the second embodiment of the invention;
Fig. 7 is a schematic view of another example of a production apparatus used to produce the lithium-ion secondary battery shown in Fig. 5, according to a third embodiment of the invention;
Fig. 8 is a view corresponding to that of Fig. 1, showing a lithium-ion secondary battery having a structure according to a fourth embodiment of this invention;
Fig. 9 is a schematic view of one example of a production apparatus used to produce the lithium-ion secondary battery shown in Fig. 8, according to the fourth embodiment of the invention; and
Fig. 10 is a view corresponding to that of Fig 2, showing another example of a battery cell formed by using a lithium-ion secondary battery having a structure according to a fifth embodiment of this invention.

### MODES FOR CARRYING OUT THE INVENTION

To further clarify the present invention, preferred embodiments of the invention will be described in detail by reference to the drawings.

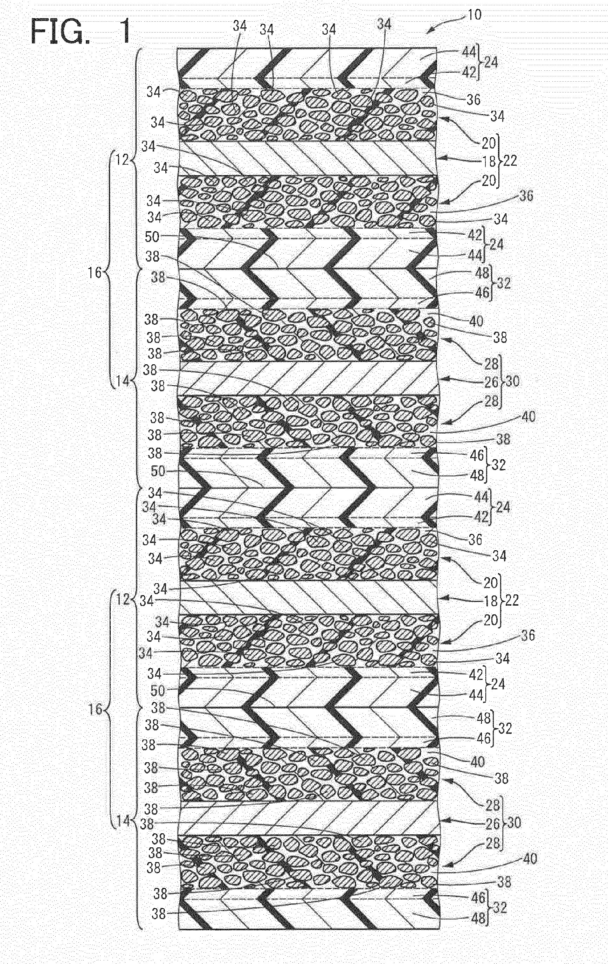

Referring first to the fragmentary longitudinal cross sectional view of Fig. 1, there is shown a lithium-ion secondary battery 10 constructed according to a first embodiment of this invention. As shown in Fig. 1, the lithium-ion secondary battery 10 of the present embodiment is constituted by a plurality of laminar sheets 16 (two laminar sheets 16 in this specific embodiment) each of which consists of a positive electrode sheet 12 and a negative electrode sheet 14 that are laminated on each other.

Described more specifically, the positive electrode sheet 12 has a positive electrode 22 consisting of a positive electrode collector foil 18 and two positive electrode active substance layers 20 integrally laminated on the respective opposite surfaces of the positive electrode collector foil 18. A first solid electrolyte layer 24 is integrally laminated on one of the opposite surfaces of each of the positive electrode active substance layers 20 of the positive electrode 22, which one surface is remote from the positive electrode collector foil 18. The negative electrode sheet 14 has a negative electrode 30 consisting of a negative electrode collector foil 26 and two negative electrode active substance layers 28 integrally laminated on the respective opposite surfaces of the negative electrode collector foil 26. A second solid electrolyte layer 32 is integrally laminated on one of the opposite surfaces of each of the negative electrode active substance layers 28 of the negative electrode 30, which one surface is remote from the negative electrode collector foil 26.

The positive electrode collector foil 18 of the positive electrode sheet 12 and the negative electrode collector foil 26 of the negative electrode sheet 14 are metallic foils. In the present embodiment, the positive electrode collector foil 18 is an aluminum foil, while the negative electrode collector foil 26 is a copper foil. In this respect, it is noted that the positive electrode collector foil 18 and the negative electrode collector foil 26 may be formed of any materials other than aluminum and copper, such as titanium, nickel, iron and other metallic materials, and alloys of those metallic materials.

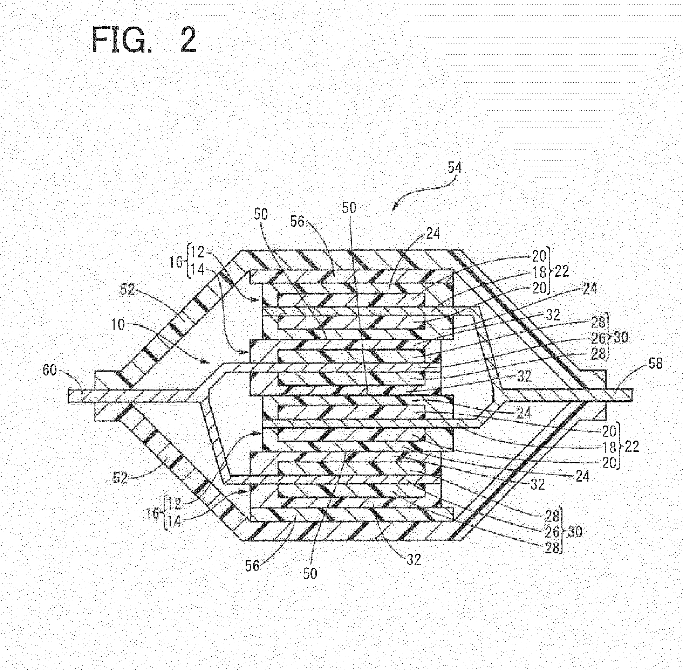

In the lithium-ion secondary battery 10 according to the present embodiment, one of the opposite widthwise end portions (right end portion as seen in Fig. 2) of each of the positive electrode collector foils 18 extends from the corresponding one of the opposite widthwise end faces (right end face as seen in Fig. 2) of the corresponding positive electrode sheet 12, as shown in Fig. 2. On the other hand, one of the opposite widthwise end portions (left end portion as seen in Fig. 2) of each of the negative electrode collector foils 26 extends from the corresponding one of the opposite widthwise end faces (left end face as seen in Fig. 2) of the corresponding negative electrode sheet 14, as also shown in Fig. 2.

As is apparent from Fig. 1, each of the positive electrode active substance layers 20 consists of a first vapor-deposited polymer film in the form of a positive-electrode vapor-deposited polymer film 36 containing a multiplicity of particles or granules of a positive electrode active substance 34, while each of the negative electrode active substance layers 28 consists of a second vapor-deposited polymer film in the form of a negative-electrode vapor-deposited polymer film 40 containing a multiplicity of particles or granules of a negative electrode active substance 38.

The positive electrode active substance 34 contained in the positive electrode active substance layer 20 (positive electrode vapor-deposited polymer film 36) is LiCoO₂. However, the positive electrode active substance 34 is not limited to LiCoO₂, but may be any active substance used in the prior art lithium-ion secondary battery. For instance, the positive electrode active substance 34 may be one or any combination of: Li(Ni-Mn-Co)O₂ (Ni of which may be partially replaced by Co or Mn); LiNiO₂; LiMn₂O₄; LiFePO₄; LiMnₓFe₁₋ₓPO₄; V₂O₅; V₆O₁₃; and TiS₂.

The negative electrode active substance 38 contained in the negative electrode active substance layer 28 (negative electrode vapor-deposited polymer film 40) is natural graphite. However, the negative electrode active substance 38 is not limited to the natural graphite, but may be any active substance used in the prior art lithium-ion secondary battery. For instance, the negative electrode active substance 38 may be one or any combination of: hard carbon; carbon nano tubes; carbon nano walls; mesophase carbon micro beads; mesophase carbon fibers; lithium metals; lithium·aluminum alloys; intercalated lithium compounds in which lithium is intercalated in graphite or carbon; Li₄Ti₅O₁₂; Si; SiO; alloys of Si; Sn; SnO; alloys of Sn; and MnO₂.

The positive electrode active substance 34 and the negative electrode active substance 38 are contained in the form of the multiple particles or granules in the positive electrode active substance layer 20 and the negative electrode active substance layer 28. The particles or granules of those positive electrode active substance 34 and negative electrode active substance 38 contained in the positive and negative electrode active substance layers 20 and 28 are not particularly limited in their size, but the average size of the primary particles measured by a scanning electron microscope, or the average size of the secondary particles which are agglomerates of the primary particles is generally selected within a range of about 10nm-50µm, since the average size of the primary or secondary particles larger than 50µm not only makes it difficult to reduce the thickness of the lithium-ion secondary battery 10, but also gives rise to a problem of reduction of the discharge capacity when the current density is relatively high, and since the average size of the primary or secondary particles smaller than 10nm results in an extreme increase of the surface area per unit weight of the positive and negative electrode active substances 34, 38, and an increase of the required amount of use of an auxiliary electrically conducive agent, giving rise to a risk of reduction of the energy density of the lithium-ion secondary battery 10.

The multiplicity of the particles or granules of the positive electrode active substance 34 are contained in the positive-electrode vapor-deposited polymer film 36 such that the particles or granules are bonded together by a resin material of the positive-electrode vapor-deposited polymer film 36, whereby the positive electrode active substance layer 20 is formed as a thin film. Similarly, the multiplicity of the particles or granules of the negative electrode active substance 38 are contained in the negative-electrode vapor-deposited polymer film 40 such that the particles or granules are bonded together by a resin material of the negative-electrode vapor-deposited polymer film 40, whereby the negative electrode active substance layer 28 is formed as a thin film.

As described above, the positive electrode active substance layer 20 and the negative electrode active substance layer 28 are respectively constituted by the positive-electrode vapor-deposited polymer film 36 and the negative-electrode vapor-deposited polymer film 40 which are formed by a vapor-deposition polymerization process which is a kind of a vacuum dry process. Accordingly, the thicknesses of the positive and negative electrode active substance layers 20, 28 can be controlled on the order of several tens of nanometers, and can therefore be controlled to be extremely small and uniform. Further, the amount of impurities contained in the positive and negative electrode active substance layers 20, 28 is sufficiently reduced.

In the present embodiment, each of the positive-electrode and negative-electrode vapor-deposited polymer films 36, 40 is formed of polyaniline, by irradiating polyurea with a ultraviolet radiation after the polyurea is formed by a known vapor-deposition polymerization process in vacuum. Thus, the vapor-deposited polymer films 36, 40 have a sufficiently high degree of electron conductivity and exhibit an adequate degree of flexibility or plasticity.

As well known in the art, polymerization to obtain polyurea does not require heat treatment of amine (including diamine, triamine and tetraamine) and isocyanate (including diisocyanate, triisocyanate and tetraisocyanate) used as material monomers, and is carried out with a polyaddition polymerization reaction which does not involve any amount of removal of water and alcohol. Accordingly, the cost of formation of the positive-electrode and negative-electrode vapor-deposited polymer films 36, 40 of polyaniline obtained by irradiating polyurea with the ultraviolet radiation can be reduced in the absence of a need for using a device for the heat treatment in the process of polymerization of the material monomers, and a facility for discharging water and alcohol removed as a result of the polymerization reaction, from a reaction chamber in which the polymerization reaction takes place. Further, polyurea has a high moisture resistance, and advantageously assures a high withstand voltage with higher stability.

The thicknesses of the positive electrode active substance layer 20 constituted by the positive-electrode vapor-deposited polymer film 36 and the negative electrode active substance layer 28 constituted by the negative electrode vapor-deposited polymer film 40 are generally selected within a range of about 1-200µm, since the thicknesses of the positive and negative electrode active substance layers 20, 28 smaller than 1µm result in insufficient amounts of the positive electrode active substance 34 in the positive electrode active substance layer 20 and the negative electrode active substance 38 in the negative electrode active substance layer 28, leading to a possibility of reduction of the energy density, and since the thicknesses larger than 200µm not only make it difficult to reduce the thickness and size of the lithium-ion secondary battery 10, but also give rise to a risk of difficulty to obtain a required amount of electric current due to an increase of the internal resistance (ion transfer resistance).

The resin materials used to form the positive-electrode and negative-electrode vapor-deposited polymer films 36, 40 are not limited to polyaniline given above by way of example. Namely, the vapor-deposited polymer films 36, 40 may be formed of any other known resin materials which permit the vapor-deposited polymer films 36, 40 to be formed integrally with the respective positive and negative electrode collector foils 18, 26, and which function as a binder for bonding together the particles of the positive and negative electrode active substances 34, 38. For instance, the vapor-deposited polymer films 36, 40 may be formed of polyurea, polyamide, polyimide, polyamideimide, polyester, polyurethane, polyazomethine, acrylic, polyparaxylylene, and perylene, other than polyaniline obtained by irradiating polyurea with a ultraviolet radiation.

Among the resin materials indicated above, the resin materials which have electron conductivity can be suitably used to form the positive-electrode and negative-electrode vapor-deposited polymer films 36, 40, since the resin materials having the electron conductivity permit a sufficient increase of the electron conductivity and an effective reduction of membrane resistance of the positive electrode active substance layer 20 and the negative electrode active substance layer 28, resulting in an advantageous improvement of the output density of the lithium-ion secondary battery 10.

In particular, the positive-electrode and negative-electrode vapor-deposited polymer films 36, 40 are preferably formed of so-called electron-conductive polymers which have high electron conductivity in the absence of an auxiliary electrically conductive agent, and which can be formed by the vapor-deposition polymerization process. The use of these electron-conductive polymers increases the productivity of the lithium-ion secondary battery 10, owing to the elimination of a step of adding the auxiliary electrically conductive agent to the polymer. For example, the electron-conductive polymers include: polyurea which has a π-conjugated structure and a side chain of which is bonded to a sulfonic acid group or a carboxyl group; and polyaniline which is obtained by irradiating the polyurea with a ultraviolet radiation, which has a π-conjugated structure and a side chain of which is bonded to a sulfonic acid group or a carboxyl group.

The positive-electrode and negative-electrode vapor-deposited polymer films 36, 40 having the electron conductivity may be formed of other resin materials instead of the above-indicated electron-conductive polymers, as long as those other resin materials have the electron conductivity in the presence of the auxiliary electrically conductive agent, and can be formed into a film by the vapor-deposition polymerization process. For example, the auxiliary electrically conductive agents which can be contained in the resin materials include: electrically conductive carbon powders such as carbon black; and electrically conductive carbon fibers such as carbon nano fibers and carbon nano tubes.

On the other hand, each of the first solid electrolyte layer 24 formed integrally with the surface of the positive electrode active substance layer 20 remote from the positive electrode collector foil 18, and the second solid electrolyte layer 32 formed integrally with the surface of the negative electrode active substance layer 28 remote from the negative electrode collector foil 26, consists of a vapor-deposited polymer film having lithium ion conductivity. Namely, like the positive electrode active substance layer 20 and the negative electrode active substance layer 28, the first solid electrolyte layer 24 and the second solid electrolyte layer 32 are formed by the vapor-deposition polymerization process which is a kind of a vacuum dry process. Accordingly, the thicknesses of the first and second solid electrolyte layers 24, 32 can also be controlled on the order of several tens of nanometers, and can therefore be controlled to be extremely small and uniform. Further, the amount of impurities contained in the first and second solid electrolyte layers 24, 32 is sufficiently reduced.

In the present embodiment, the first solid electrolyte layer 24 has a two-layer structure consisting of a first inner vapor-deposited polymer film 42 and a first outer vapor-deposited polymer film 44 integrally laminated on the first inner vapor-deposited polymer film 42. The first inner vapor-deposited polymer film 42 constitutes an inner part of the first solid electrolyte layer 24 on the side of the positive electrode active substance layer 20 and is integrally laminated on the positive electrode active substance layer 20. The first outer vapor-deposited polymer film 44 constitutes an outer part of the first solid electrolyte layer 24 remote from the positive electrode active substance layer 20. Similarly, the second solid electrolyte layer 32 has a two-layer structure consisting of a second inner vapor-deposited polymer film 46 and a second outer vapor-deposited polymer film 48 integrally laminated on the second inner vapor-deposited polymer film 46. The second inner vapor-deposited polymer film 46 constitutes an inner part of the second solid electrolyte layer 32 on the side of the negative electrode active substance layer 28 and is integrally laminated on the negative electrode active substance layer 28. The second outer vapor-deposited polymer film 48 constitutes an outer part of the second solid electrolyte layer 32 remote from the negative electrode active substance layer 28.

Further, the first inner and outer vapor-deposited polymer films 42, 44 giving the first solid electrolyte layer 24, and the second inner and outer vapor-deposited polymer films 46, 48 giving the second solid electrolyte layer 32 are all formed of polyurea in the present embodiment, so that like the positive and negative electrode active substance layers 20, 28 constituted by the positive-electrode and negative-electrode vapor-deposited polymer films 36, 40 formed of polyaniline, the first and second solid electrolyte layers 24, 32 can be formed at a reduced cost, and has a high withstand voltage with higher stability, and exhibits an adequate degree of flexibility or plasticity.

Polyurea used to form the first inner and outer vapor-deposited polymer films 42, 44 and the second inner and outer vapor-deposited polymer films 46, 48 has a repeating unit structure of polyethylene oxide represented by the following Chemical Formula (1). Further, this polyethylene oxide contains a lithium salt, so that all of the above-indicated four vapor-deposited polymer films 42, 44, 46 and 48, and the first and second solid electrolyte layers 24 and 32 exhibit a high degree of lithium ion conductivity.

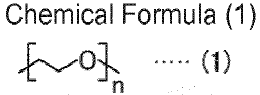

In the present embodiment, the first inner vapor-deposited polymer film 42 formed integrally with the positive electrode active substance layer 20, and the second inner vapor-deposited polymer film 46 formed integrally with the negative electrode active substance layer 28 are formed of a polymer having a functional group which includes an element of high electronegativity, namely, a polymer having a negatively charged functional group. For example, the first and second inner vapor-deposited polymer films 42, 46 are formed of polyurea having a cyano group (-CN) as a side chain.

It is noted, however, that the lithium-ion conductive resin material of the first inner and outer vapor-deposited polymer films 42, 44 constituting the first solid electrolyte layer 24, and the second inner and outer vapor-deposited polymer films 46, 48 constituting the second solid electrolyte layer 32 is not limited to polyurea given above by way of example. The four vapor-deposited polymer films 42, 44, 46, 48 may be formed of any other known lithium-ion conductive resin material which permits those polymer films to be formed integrally with the positive and negative electrode active substance layers 20, 28 by the vapor-deposition polymerization process.

Described more specifically, the resin material of the four vapor-deposited polymer films 42-48 of the first and second solid electrolyte layers 24, 32 may be selected from among: polyamide having a repeating unit structure of polyethylene oxide and containing a lithium salt in polyethylene oxide; polyimide having a repeating unit structure of polyethylene oxide and containing a lithium salt in polyethylene oxide; polyamideimide having a repeating unit structure of polyethylene oxide and containing a lithium salt in polyethylene oxide; polyester having a repeating unit structure of polyethylene oxide and containing a lithium salt in polyethylene oxide; polyurethane having a repeating unit structure of polyethylene oxide and containing a lithium salt in polyethylene oxide; polyazomethine having a repeating unit structure of polyethylene oxide and containing a lithium salt in polyethylene oxide; polyurea which contains a lithium salt and a side chain of which is bonded to a sulfonic acid group; polyamide which contains a lithium salt and a side chain of which is bonded to a sulfonic acid group; polyimide which contains a lithium salt and a side chain of which is bonded to a sulfonic acid group; polyamideimide which contains a lithium salt and a side chain of which is bonded to a sulfonic acid group; polyester which contains a lithium salt and a side chain of which is bonded to a sulfonic acid group; polyurethane which contains a lithium salt and a side chain of which is bonded to a sulfonic acid group; and polyazomethine which contains a lithium salt and a side chain of which is bonded to a sulfonic acid group.

In summary, the first inner and outer vapor-deposited polymer films 42, 44 and the second inner and outer vapor-deposited polymer films 46, 48 which respectively constitute the first and second solid electrolyte layers 24, 32 may be formed of the lithium-ion conductive resin material (hereinafter referred to as "resin A") which has a repeating unit structure of polyethylene oxide, which contains a lithium salt in polyethylene oxide, and which can be formed into a film by the vapor-deposition polymerization process, or the lithium-ion conductive resin material (hereinafter referred to as "resin B") which contains a lithium salt, a side chain of which is bonded to a sulfonic acid group, and which can be formed into a film by the vapor-deposited polymerization process. It is noted that the repeating unit structure of polyethylene oxide of the resin A may be bonded to the molecules of the resin A, or may not be bonded to the molecules but merely mixed in the resin A.

All of the first inner and outer vapor-deposited polymer films 42, 44 and the second inner and outer vapor-deposited polymer films 46, 48 need not be formed of the same resin material. For example, at least one of the four vapor-deposited polymer films 42, 44, 46, 48 may be formed of one of the resin materials indicated above, which is different from the resin material or materials of the other vapor-deposited polymer film or films.

In the present embodiment, the first and second inner vapor-deposited polymer films 42, 46 are formed of the above-indicated resin materials which are the polymers having, as a side chain, the functional group which includes an element of high electronegativity. More specifically described, the resin materials having any one of the following functional groups as the side chain are selected, for example: cyano group (-CN); fluoro group (-F); chloro group (-Cl); bromo group (-Br); iodo group (-I); carbonyl group (=O); carboxyl group (-COOH); hydroxyl group (-OH); nitro group (-NO₂); and sulfonate group (-SO₃H).

The lithium salt contained in the first and second solid electrolyte layers 24 and 32 is an ion dissociation compound containing lithium, and is not particularly limited. Any kind of lithium salt conventionally used to impart lithium-ion conductivity to a desired resin material may be used. For instance, LiN(SO₂CF₃)₂, LiN(SO₂C₂F₅)₂, LiBF₄ and LiClO₄ may be used as the lithium salt to be contained in the solid electrolyte layers 24, 32.

The lithium salt is partially dissociated (ionized) in the first solid electrolyte layer 24 (first inner and outer vapor-deposited polymer films 42, 44) and the second solid electrolyte layer 32 (second inner and outer vapor-deposited polymer films 46, 48) which are formed of the ion-conductive resin material (polyurea having the repeating unit structure of polyethylene oxide, in the present embodiment), so that a portion of the lithium salt contained in the solid electrolyte layers 24, 32 exists therein in the form of lithium ions and anions.

In the lithium-ion secondary battery 10 according to the present embodiment, the polymer used to form the first inner vapor-deposited polymer film 42 of the first solid electrolyte layer 24 integrally with the positive electrode active substance layer 20, and to form the second inner vapor-deposited polymer film 46 of the second solid electrolyte layer 32 integrally with the negative electrode active substance layer 28 has the negatively charged functional group which includes an element of high electronegativity, as described above. Accordingly, the lithium ions derived from the lithium salt existing within the first and second solid electrolyte layers 24, 32 are attracted by the negatively charged functional group of the polymer of the first and second inner vapor-deposited polymer films 42, 46, whereby the lithium ions exist more densely in the first inner vapor-deposited polymer film 42 than in the first outer vapor-deposited polymer film 44, and in the second inner vapor-deposited polymer film 46 than in the second outer vapor-deposited polymer film 48.

Namely, the lithium ions exist more densely in a thickness portion of the first solid electrolyte layer 24 adjacent to the positive electrode active substance layer 20, than in its intermediate thickness portion and its thickness portion remote from the positive electrode active substance layer 20 (its thickness portion adjacent to the second solid electrolyte layer 32), and in a thickness portion of the second solid electrolyte layer 32 adjacent to the negative electrode active substance layer 28, than in its intermediate thickness portion and its thickness portion remote from the negative electrode active substance layer 28 (its thickness portion adjacent to the first solid electrolyte layer 24). That is, the lithium ions are unevenly distributed within the first and second solid electrolyte layers 24, 32 such that the local density of the lithium ions is higher in the thickness portion (the first inner vapor-deposited polymer film 42) of the first solid electrolyte layer 24 adjacent to the positive electrolyte active substance layer 20, and in the thickness portion (the second inner vapor-deposited polymer film 46) of the second solid electrolyte layer 32 adjacent to the negative electrode active substance layer 28.

In the present lithium-ion secondary battery 10, the content of the lithium ions is higher in the thickness portion of the first solid electrolyte layer 24 adjacent to the positive electrode active substance layer 20, so that a larger amount of the lithium ions move per unit time at a higher velocity between the positive electrode active substance 34 in the positive electrode active substance layer 20 and the first solid electrolyte layer 24, during charging and discharging of the lithium-ion secondary battery 10. Similarly, the content of the lithium ions is higher in the thickness portion of the second solid electrolyte layer 32 adjacent to the negative electrode active substance layer 28, so that a larger amount of the lithium ions move per unit time at a higher velocity between the negative electrode active substance 38 in the negative electrode active substance layer 28 and the second solid electrolyte layer 32, during charging and discharging of the lithium-ion secondary battery 10. As a result, the performance of the lithium-ion secondary battery 10 is significantly and effectively improved.

As described above, it is generally preferred that the positive-electrode vapor-deposited polymer film 36 which constitutes the positive electrode active substance layer 20, and the negative-electrode vapor-deposited polymer film 40 which constitutes the negative electrode active substance layer 28 are formed of the resin material having a high degree of electron conductivity, in order to improve the output density of the lithium-ion secondary battery 10. In this respect, the performance of the present lithium-ion secondary battery 10 is improved owing to the higher content of the lithium ions in the thickness portion of the first solid electrolyte layer 24 adjacent to the positive electrode active substance layer 20 and in the thickness portion of the second solid electrolyte layer 32 adjacent to the negative electrode active substance layer 28.

Therefore, a sufficient improvement of the output density can be expected even where the positive-electrode and negative-electrode vapor-deposited polymer films 36, 40 are formed of the ion-conductive resin material rather than the electron-conductive resin material. Where the vapor-deposited polymer films 36, 40 are formed of the ion-conductive resin material, there is an advantage that the lithium ions move more smoothly and more rapidly between the active substance 34 in the positive electrode active substance layer 20 and the first solid electrolyte layer 24, and between the active substance 38 in the negative electrode active substance layer 28 and the second solid electrolyte layer 32.

Where the positive-electrode and negative-electrode vapor-deposited polymer films 36, 40 are formed of the ion-conductive resin material, this ion-conductive resin material is preferably selected from the above-indicated ion-conductive resin materials which are used to form the first solid electrolyte layer 24 (first inner and outer vapor-deposited polymer films 42, 44) and the second solid electrolyte layer 32 (second inner and outer vapor-deposited polymer films 46, 48), and which may or may not contain a lithium salt.

Although the thickness of each of the first solid electrolyte layer 24 and the second solid electrolyte layer 32 is not particularly limited, it is generally selected within a range of about 25nm-50µm, since the thickness smaller than 25nm makes it difficult to ensure sufficient electric insulation between the positive and negative electrode active substance layers 20, 28, giving rise to a possibility of internal short-circuiting, and since the thickness larger than 50µm not only makes it difficult to reduce the thickness of the lithium-ion secondary battery 10, but also gives rise to a risk of reduction of the output density due to a high internal resistance.

The thicknesses of the first inner and outer vapor-deposited polymer films 42, 44 of the first solid electrolyte layer 24, and the thicknesses of the second inner and outer vapor-deposited polymer films 46, 48 of the second solid electrolyte layer 32 are suitably selected depending upon the thicknesses of the first and second solid electrolyte layers 24, 32.

In the lithium-ion secondary battery 10 according to the present embodiment, the two laminar sheets 16 each consisting of the positive and negative electrode sheets 12 and 14 constructed as described above are laminated on each other without being bonded together, such that the positive and negative electrode sheets 12, 14 are laminated on each other without being bonded together.

The lithium-ion secondary battery 10 having the structure described above has three cell elements each in the form of a laminar body consisting of the positive electrode 22, the negative electrode 30, and the first and second solid electrolyte layers 24 and 32, which are integrally laminated on each other such that the positive and negative electrodes 22 and 30 are located adjacent to the respective first and second solid electrolyte layers 24, 32, and such that the two positive electrode active substance layers 20 of the positive electrode 22 are integrally laminated on the respective opposite surfaces of the positive electrode collector foil 18 while the two negative electrode active substance layers 28 of the negative electrode 30 are integrally laminated on the respective opposite surfaces of the negative electrode collector foil 26. The first solid electrolyte layer 24 and the second solid electrolyte layer 32 located between the positive electrode 22 and the negative electrode 30 are merely superposed on each other without being bonded together, with a lamination boundary being formed therebetween. In this respect, it is noted that the first and second solid electrolyte layers 24 and 32 between the positive and negative electrodes 22, 30 may be bonded together by a thermal bonding process.

For instance, the lithium-ion secondary battery 10 having the structure described above is used as a battery cell device 54 covered by two covering films 52, as shown in Fig. 2.

Namely, the battery cell device 54 is provided with two protective films 56 laminated on the respective opposite end faces of the lithium-ion battery cell 10 which are opposed to each other in the direction of lamination of the two laminar sheets 16. Further, the end portion of each of the two positive electrode collector foils 18 which extends from one of the widthwise opposite end faces of the corresponding laminar sheet 16 in the direction of width (right and left direction as seen in Fig. 2) of the lithium-ion secondary battery 10 is welded or otherwise bonded and connected to one end portion of a positive terminal 58 which extends from the lithium-ion secondary battery 10 in its direction of width. On the other hand, the end portion of each of the two negative electrode collector foils 26 which extends from the other of the widthwise opposite end faces of the corresponding laminar sheet 16 in the direction of width of the lithium-ion secondary battery 10 is welded or otherwise bonded and connected to one end portion of a negative terminal 60 which extends from the lithium-ion secondary battery 10 in its direction of width. Thus, the three cell elements of the lithium-ion secondary battery 10 are connected in parallel with each other.

A laminar body consisting of the lithium-ion secondary battery 10 and the two protective films 56 is covered by the two covering films 52 such that the laminar body is sandwiched by and between the two covering films 52. In this state, the end portion of the positive terminal 58 remote from the positive electrode collector foils 18, and the end portion of the negative terminal 60 remote from the negative electrode collector foils 26 extend outwardly from the mutually connected end portions of the two covering films 52. Thus, the battery cell device 54 wherein the lithium-ion secondary battery 10 is covered by the covering films 52 is formed. In Fig. 2, the battery cell device 54 is shown for easier understanding of its internal structure such that a space exists between the covering films 52 and the lithium-ion secondary battery 10. However, it is to be understood that the lithium-ion secondary battery 10 and the covering films 52 are actually held in close contact with each other, without such a space existing within the battery cell device 54.

The battery cell device 54 having the structure described above is used alone, or a plurality of the battery cell devices 54 are connected in parallel or in series with each other so as to constitute a battery pack.

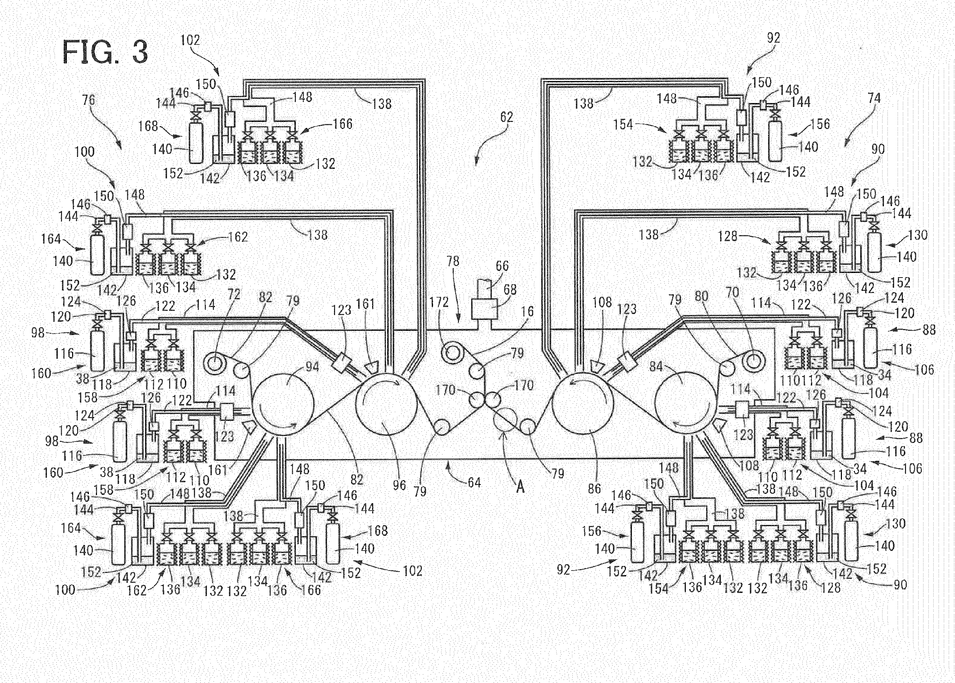

For example, the lithium-ion secondary battery 10 having the structure described above is produced by a production apparatus 62 constructed as shown in Fig. 3 according to the present embodiment.

As is apparent from Fig. 3, the production apparatus 62 has a vacuum chamber 64 as a reaction chamber. An interior space of this vacuum chamber 64 is evacuated by an operation of a vacuum pump 68 connected to an exhaust pipe 66 communicating with the interior space. It will be understood that the exhaust pipe 66 and the vacuum pump 68 constitute evacuating means in the present embodiment.

The production apparatus 62 further has a first supply roller 70, a second supply roller 72, a positive electrode sheet forming unit 74, a negative electrode sheet forming unit 76 and a laminar sheet forming unit 78. In Fig. 3, reference numeral 79 denotes tension rollers.

Described more specifically, each of the first supply roller 70 and the second supply roller 72 is disposed within the vacuum chamber 64 such that the supply rollers 70, 72 are automatically rotatable by an electric motor (not shown), for example. The first supply roller 70 is configured to receive a roll of an aluminum foil tape or strip 80 which provides the positive electrode collector foil 18, so that the aluminum foil tape 80 is continuously fed from the roll to the positive electrode sheet forming unit 74. Similarly, the second supply roller 72 is configured to receive a roll of a copper foil tape or strip 82 which provides the negative electrode collector foil 26, so that the cooper foil tape 82 is continuously fed from the roll to the negative electrode sheet forming unit 76. It will be understood from the foregoing description that the first supply roller 70 serves as positive electrode collector foil supplying means while the second supply roller 72 serves as negative electrode collector foil supplying means.

The positive electrode sheet forming unit 74 is configured to continuously form the positive electrode sheet 12, and has a first feeding roller 84 and a second feeding roller 86 which are disposed within the vacuum chamber 64. The positive electrode sheet forming unit 74 further has a positive electrode active substance layer forming unit 88, a first inner vapor-deposited polymer film forming unit 90 and a first outer vapor-deposited polymer film forming unit 92 which correspond to the first feeding roller 84 and which are disposed outside the vacuum chamber 64. The positive electrode sheet forming unit 74 further has another positive electrode active substance layer forming unit 88, another first inner vapor-deposited polymer film forming unit 90 and another first outer vapor-deposited polymer film forming unit 92 which correspond to the second feeding roller 86 and which are also disposed outside the vacuum chamber 64.

Each of the first feeding roller 84 and the second feeding roller 86 provided in the positive electrode sheet forming unit 74 is automatically rotatable by an electric motor (not shown), for example. The first feeding roller 84 receives the aluminum foil tape 80 fed from the first supply roller 70 being rotated, and is rotated to further feed the aluminum foil tape 80 in one of its opposite circumferential directions (namely, in a clockwise direction indicated by an arrow in Fig. 3). Similarly, the second feeding roller 86 receives the aluminum foil tape 80 fed from the first feeding roller 84 being rotated, and is rotated to further feed the aluminum foil tape 80 in one of its opposite circumferential directions (namely, in a counterclockwise direction indicated by an arrow in Fig. 3). In this respect, it is noted that the aluminum foil tape 80 is fed such that one of its opposite surfaces is in rolling contact with the outer circumferential surface of the first feeding roller 84, while the other of the opposite surfaces is in rolling contact with the outer circumferential surface of the second feeding roller 86.

Each of the two positive electrode active substance layer forming units 88 includes first vapor-deposited polymer film forming means in the form of a positive electrode vapor-deposited polymer film forming device 104, positive electrode active substance introducing means in the form of a positive electrode active substance introducing device 106, and a ultraviolet irradiating device 108.

The two positive electrode active substance layer forming units 88, 88 are identical in construction with each other, and the two first inner vapor-deposited polymer film forming units 90, 90 are identical in construction with each other. Similarly, the two first outer vapor-deposited polymer film forming units 92, 92 are identical in construction with each other. Therefore, only the arrangements of the positive electrode active substance layer forming unit 88, first inner vapor-deposited polymer film forming unit 90 and first outer vapor-deposited polymer film forming unit 92 which correspond to the first feeding roller 84 will be described, and the arrangement of those units 88, 90 and 92 corresponding to the second feeding roller 86 will not be described redundantly.

The positive electrode vapor-deposited polymer film forming device 104 is configured to form the positive-electrode vapor-deposited polymer film 36 by the vacuum vapor-deposition polymerization process, and has a first vapor source 110 and a second vapor source 112. These first and second vapor sources 110 and 112 have respective monomer reservoirs, and respective heaters. The monomer reservoirs of the first and second vapor sources 110 and 112 accommodate respective two different kinds of material monomer for forming the positive-electrode vapor-deposited polymer film 36. In the present embodiment wherein the positive-electrode vapor-deposited polymer film 36 is formed of polyaniline, the monomer reservoir of the first vapor source 110 accommodates aromatic diamine such as 1,4-phenylenediamine-2-sulfonic acid, in a liquid state, while the monomer reservoir of the second vapor source 112 accommodates aromatic diisocyanate such as 1,4-phenylene diisocyanate, in a liquid state. Those aromatic diamine and aromatic diisocyanate are monomers for obtaining polyurea before irradiation with an ultraviolet radiation. The two kinds of material monomer accommodated in the respective monomer reservoirs of the first and second vapor sources 110 and 112 are heated and evaporated by the respective heaters indicated above.

A vapor supply pipe 114 is provided to connect the first and second vapor sources 110 and 112 to the vacuum chamber 64. This vapor supply pipe 114 is open toward the outer circumferential surface of the first feeding roller 84 at its end within the vacuum chamber 64, and is open at the other end to the monomer reservoirs through respective shut-off valves, which are opened and closed to permit and inhibit flows of vapors of the material monomers into the vapor supply pipe 114.

Thus, the positive electrode vapor-deposited polymer film forming device 104 is configured such that the vapors of the two kinds of material monomer generated in the first and second vapor sources 110 and 112 are introduced into the vacuum chamber 64 through the vapor supply pipe 114, and are blown onto the aluminum foil tape 80 being fed in rolling contact with the outer circumferential surface of the first feeding roller 84.

The positive electrode active substance introducing device 106 has a gas cylinder 116 charged with a carrier gas (a first carrier gas) such as an argon gas, a nitrogen gas or any other inert gas, and a powder reservoir 118 accommodating the positive electrode active substance 34 (LiCoO₂ in this embodiment) in a powdered form. A gas supply pipe 120 is provided to connect the gas cylinder 116 to the powder reservoir 118, while a powder supply pipe 122 is provided to connect the powder reservoir 118 to the vacuum chamber 64. The powder supply pipe 122 is partially inserted within the vapor supply pipe 114 of the above-described positive electrode vapor-deposited polymer film forming device 104, such that the outlet end portion of the powder supply pipe 122 located within the vapor supply pipe 114 is open toward the outer circumferential surface of the first feeding roller 84, through the corresponding outlet end portion of the vapor supply pipe 114. Namely, the corresponding outlet end portions of the vapor supply pipe 114 and the powder supply pipe 122 on the side of the vacuum chamber 64 cooperate with each other to form a double-pipe structure.

In the thus constructed positive electrode active substance introducing device 106, the carrier gas supplied from the gas cylinder 116 is introduced into the powder reservoir 118 through the gas supply pipe 120, so that the positive electrode active substance 34 accommodated within the powder reservoir 118 is dispersed by the carrier gas introduced into the powder reservoir 118, whereby the dispersed active substance 34 is introduced into the vacuum chamber 64, together with the carrier gas, through the powder supply pipe 122 partially inserted within the vapor supply pipe 114. Since the powder supply pipe 122 is partially inserted within the vapor supply pipe 114, the positive electrode active substance 34 is mixed with the vapors of the two kinds of material monomer, within the outlet end portion of the vapor supply pipe 114, and a mixture of the vapors of the two kinds of material monomer, positive electrode active substance 34 and carrier gas is blown from the outlet open end of the vapor supply pipe 114 onto one of the opposite surfaces of the aluminum foil tape 80 being moved in rolling contact with the outer circumferential surface of the first feeding roller 84, such that the mixture is blown at a predetermined circumferential position of the first feeding roller 84.

The gas supply pipe 120 is provided with a known mass flow controller 124 which controls a flow rate of the carrier gas, for regulating a rate of introduction of the positive electrode active substance 34 into the vacuum chamber 64. The powder supply pipe 122 is provided with a known powder milling device 126 having a known construction, which is configured to mill or pulverize the positive electrode active substance 34 flowing through the powder supply pipe 122 together with the carrier gas, for reducing the particle size of the positive electrode active substance 34, before the active substance 34 is blown onto the above-indicated surface of the aluminum foil tape 80.

The corresponding outlet end portions of the vapor supply pipe 114 and the powder supply pipe 122 cooperating to form the double-pipe structure are provided with a shut-off valve 123 configured to concurrently open or close the vapor supply pipe 114 and the powder supply pipe 122. For example, this shut-off valve 123 is an electromagnetic valve which is alternately opened and closed at a predetermined time interval under the control of a controller not shown, so that the mixture of the two kinds of material monomer and the positive electrode active substance 34 is intermittently blown onto the above-indicated surface of the aluminum foil tape 80 being fed in rolling contact with the outer circumferential surface of the first feeding roller 84, while the shut-off valve 123 is alternately opened and closed.

The ultraviolet irradiating device 108 is disposed within the vacuum chamber 64, at a position downstream of the outlet open end of the vapor supply pipe 114 in the direction of feeding of the aluminum foil tape 80 in rolling contact with the outer circumferential surface of the first feeding roller 84. The ultraviolet irradiating device 108 is configured to irradiate the above-indicated surface of the aluminum foil tape 80 with an ultraviolet radiation, more specifically, irradiate, with the ultraviolet radiation, the positive-electrode vapor-deposited polymer film 36 of polyurea which is formed on the surface of the aluminum foil tape 80 by the positive electrode active substance layer forming unit 88 as described below.

The first inner vapor-deposited polymer film forming unit 90 includes second vapor-deposited polymer film forming means in the form of a first inner vapor-deposited polymer film forming device 128, and lithium salt introducing means in the form of a lithium salt introducing device 130. The first inner vapor-deposited polymer film forming device 128 is configured to form the first inner vapor-deposited polymer film 42 by the vacuum vapor-deposition polymerization process, and has a first vapor source 132, a second vapor source 134 and a third vapor source 136. These first, second and third vapor sources 132, 134 and 136 have respective monomer reservoirs, and respective heaters. The monomer reservoirs of the first, second and third vapor sources 132, 134 and 136 accommodate respective three different kinds of material monomer for forming the first inner vapor-deposited polymer film 42. The three kinds of material monomer accommodated in the respective monomer reservoirs of the first, second and third vapor sources 132, 134 and 136 are heated and evaporated by the respective heaters.

In the present embodiment wherein the first inner vapor-deposited polymer film 42 is formed of polyurea which has a repeating unit structure of polyethylene oxide and a functional group (cyano group) including an element of high electronegativity, the monomer reservoirs of the first and second vapor sources 132 and 134 respectively accommodate ethylene glycol diamine such as diethylene glycol bis(3-aminopropyl) ether, and aromatic diisocyanate having a cyano group such as 1-cyano-3,5-xylylene diisocyanate, in a liquid phase, while the monomer reservoir of the third vapor source 136 accommodates oligo-ethylene oxide (low molecular polyethylene oxide having a molecular weight of 200-2000) in a liquid or solid phase. The three kinds of material monomer accommodated in the respective monomer reservoirs of the first, second and third vapor sources 132, 134 and 136 are heated and evaporated by the respective heaters indicated above.

The two kinds of material monomer used to form the polyurea which has a repeating unit structure of polyethylene oxide and a functional group including an element of high electronegativity may be a combination of the above-indicated material monomers, a combination of diethylene glycol bis(3-aminopropyl) ether and 1-fluoro-3,5-xylylene diisocyanate, or a combination of 5-bromobiphenyl-2,4'-diamine and [oxobis(trimethylene) dioxobis(trimethylene)] diisocyanate, for example.

A vapor supply pipe 138 is provided to connect the monomer reservoirs of the first, second and third vapor sources 132, 134, 136 to the vacuum chamber 64. This vapor supply pipe 138 is open at its outlet end within the vacuum chamber 64, toward the outer circumferential surface of the first feeding roller 84, at a position downstream of the outlet open end of the vapor supply pipe 114 of the positive electrode active substance layer forming unit 88 in the direction of feeding of the aluminum foil tape 80 in rolling contact with the outer circumferential surface of the first feeding roller 84, and open at its fixed end to the monomer reservoirs through respective shut-off valves, which are opened and closed to permit and inhibit flows of vapors of the material monomers into the vapor supply pipe 138.

In the first inner vapor-deposited polymer film forming device 128, the vapors of the three kinds of material monomer generated in the respective monomer reservoirs of the first, second and third vapor sources 132, 134 and 136 are introduced into the vacuum chamber 64 through the vapor supply pipe 138 and blown onto the aluminum foil tape 80 being moved in rolling contact with the outer circumferential surface of the first feeding roller 84.

The lithium salt introducing device 130 has a gas cylinder 140, a powder reservoir 142, a gas supply pipe 144, a mass flow controller 146, a powder supply pipe 148, and a powder milling device 150. Thus, the lithium salt introducing device 130 is basically identical in construction with the positive electrode active substance introducing device 106 of the positive electrode active substance layer forming unit 88. The gas cylinder 140 of the lithium salt introducing device 130 is charged with a carrier gas (a second carrier gas) such as an inert gas, while the powder reservoir 142 accommodates a lithium-ion conductivity rendering substance 152 in a powdered form, which is LiN(SO₂CF₃)₂ in this embodiment. The powder supply pipe 148 of the lithium salt introducing device 130 is partially inserted within the outlet end portion of the vapor supply pipe 138 of the first inner vapor-deposited polymer film forming device 128, such that the outlet end portion of the powder supply pipe 148 located within the outlet end portion of the vapor supply pipe 138 is open toward the outer circumferential surface of the first feeding roller 84, through the corresponding outlet end portion of the vapor supply pipe 138.

In the thus constructed lithium salt introducing device 130, the carrier gas supplied from the gas cylinder 140 is introduced into the powder reservoir 142 through the gas supply pipe 144, so that the lithium-ion conductivity rendering substance 152 accommodated within the powder reservoir 142 is dispersed in the carrier gas introduced into the powder reservoir 142, whereby the dispersed lithium-ion conductivity rendering substance 152 is supplied to the outlet end portion of the vapor supply pipe 138, together with the carrier gas, through the powder supply pipe 148. The lithium-ion conductivity rendering substance 152 is mixed with the vapors of the three kinds of material monomer within the outlet end portion of the vapor supply pipe 138, and a mixture of the vapors of the three kinds of material monomer, lithium-ion conductivity rendering substance 152 and carrier gas is blown from the outlet open end of the vapor supply pipe 138 onto one of the opposite surfaces of the aluminum foil tape 80 being moved in rolling contact with the outer circumferential surface of the first feeding roller 84.

The first outer vapor-deposited polymer film forming unit 92 includes second vapor-deposited polymer film forming means in the form of a first outer vapor-deposited polymer film forming device 154, and lithium salt introducing means in the form of a lithium salt introducing device 156. The first outer vapor-deposited polymer film forming device 154 is configured to form the first outer vapor-deposited polymer film 44 by the vacuum vapor-deposition polymerization process. The lithium salt introducing device 156 is configured to introduce the lithium-ion conductivity rendering substance 152 into the first outer vapor-deposited polymer film 44 formed by the first outer vapor-deposited polymer film forming device 154. The first outer vapor-deposited polymer film forming device 154 is identical in construction with the first inner vapor-deposited polymer film forming device 128 of the first inner vapor-deposited polymer film forming unit 90, and the lithium salt introducing device 156 is identical in construction with the lithium salt introducing device 130 of the fist inner vapor-deposited polymer film forming unit 90.

In Fig. 3, the reference signs used to denote the members and portions of the first inner vapor-deposited polymer film forming device 128 and lithium salt introducing device 130 of the first inner vapor-deposited polymer film forming unit 90 are used to denote the corresponding members and portions of the first outer vapor-deposited polymer film forming device 154 and lithium salt introducing device 156 of the first outer vapor-deposited polymer film forming unit 92, which will not be described redundantly.

The monomer reservoirs of the first, second and third vapor sources 132, 134 and 136 of the first outer vapor-deposited polymer film forming device 154 accommodate the respective three kinds of material monomer for the first outer vapor-deposited polymer film 44, which polymer film 44 is remote from the positive electrode active substance layer 20. In the present embodiment wherein the first outer vapor-deposited polymer film 44 is formed of polyurea which has a repeating unit structure of polyethylene oxide, the monomer reservoirs of the first and second vapor sources 132 and 134 respectively accommodate, as the respective two kinds of material monomer, ethylene glycol diamine such as diethylene glycol bis(3-aminopropyl) ether, and aromatic diisocyanate such as m-xylylene diisocyanate, in a liquid phase, while the monomer reservoir of the third vapor source 136 accommodates oligo-ethylene oxide (low molecular polyethylene oxide having a molecular weight of 200-2000) in a liquid or solid phase. The powder reservoir 142 of the lithium salt introducing device 156 accommodates the lithium-ion conductivity rendering substance 152 in a powdered form, which is LiN(SO₂CF₃)₂ in this embodiment.

On the other hand, the negative electrode sheet forming unit 76 is configured to continuously form the negative electrode sheet 14, and is identical in construction with the positive electrode sheet forming unit 74, and has a first feeding roller 94 and a second feeding roller 96 which are disposed within the vacuum chamber 64. The negative electrode sheet forming unit 76 further has a negative electrode active substance layer forming unit 98, a second inner vapor-deposited polymer film forming unit 100 and a second outer vapor-deposited polymer film forming unit 102 which correspond to the first feeding roller 94 and which are disposed outside the vacuum chamber 64. The negative electrode sheet forming unit 76 further has another negative electrode active substance layer forming unit 98, another second inner vapor-deposited polymer film forming unit 100 and another second outer vapor-deposited polymer film forming unit 102 which correspond to the second feeding roller 96 and which are also disposed outside the vacuum chamber 64.

The first feeding roller 94 and the second feeding roller 96 provided in the negative electrode sheet forming unit 76 are rotated to feed the copper foil tape 82 fed from the roll installed on the second supply roller 72, in the direction indicated by arrows in Fig. 3, such that the opposite surfaces of the copper foil tape 82 are held in rolling contact with the outer circumferential surfaces of the respective first and second feeding rollers 94 and 96. The first and second feeding rollers 94 and 96 are basically identical in construction with the first and second feeding rollers 84 and 86 in the positive electrode sheet forming unit 74.

Each of the two negative electrode active substance layer forming units 98 includes third vapor-deposited polymer film forming means in the form of a negative electrode vapor-deposited polymer film forming device 158, negative electrode active substance introducing means in the form of a negative electrode active substance introducing device 160, and a ultraviolet irradiating device 161. The negative electrode vapor-deposited polymer film forming device 158 is configured to form the negative-electrode vapor-deposited polymer film 40 by the vacuum vapor-deposition polymerization process. The negative electrode active substance introducing device 160 is configured to introduce the negative electrode active substance 38 into the negative-electrode vapor-deposited polymer film 40 formed by the negative electrode vapor-deposited polymer film forming device 158, while the ultraviolet irradiating device 161 is configured to irradiate the negative-electrode vapor-deposited polymer film 40 containing the negative electrode active substance 38, with an ultraviolet radiation. Those negative-electrode vapor-deposited polymer film forming device 158, negative electrode active substance introducing device 160 and ultraviolet irradiating device 161 are identical in construction with the positive-electrode vapor-deposited polymer film forming device 104, positive electrode active substance introducing device 106 and ultraviolet irradiating device 108 of the positive electrode active substance layer forming unit 88 of the positive electrode sheet forming unit 74.

Each of the two second inner vapor-deposited polymer film forming units 100 includes fourth vapor-deposited polymer film forming means in the form of a second inner vapor-deposited polymer film forming device 162, and lithium salt introducing means in the form of a lithium salt introducing device 164. The second inner vapor-deposited polymer film forming device 162 is configured to form the second inner vapor-deposited polymer film 46 by the vacuum vapor-deposition polymerization process, and the lithium salt introducing device 164 is configured to introduce the lithium-ion conductivity rendering substance 152 into the second inner vapor-deposited polymer film 46 formed by the second inner vapor-deposited polymer film forming device 162. Those second inner vapor-deposited polymer film forming device 162 and lithium salt introducing device 164 are identical in construction with the first inner vapor-deposited polymer film forming device 128 and lithium salt introducing device 130 of the first inner vapor-deposited polymer film forming unit 90 of the positive electrode sheet forming unit 74.

Each of the second outer vapor-deposited polymer film forming units 102 includes fourth vapor-deposited polymer film forming means in the form of a second outer vapor-deposited polymer film forming device 166, and lithium salt introducing means in the form of a lithium salt introducing device 168. The second outer vapor-deposited polymer film forming device 166 is configured to form the second outer vapor-deposited polymer film 48 by the vacuum vapor-deposition polymerization process. The lithium salt introducing device 168 is configured to introduce the lithium-ion conductivity rendering substance 152 into the second outer vapor-deposited polymer film 48 formed by the second outer vapor-deposited polymer film forming device 166. These second outer vapor-deposited polymer film forming device 166 and lithium salt introducing device 168 are identical in construction with the first outer vapor-deposited polymer film forming device 154 and lithium salt introducing device 156 of the first outer vapor-deposited polymer film forming unit 92 of the positive electrode sheet forming unit 74.

In Fig. 3, the reference signs used to denote the members and portions of the positive electrode sheet forming unit 74 are used to denote the corresponding members and portions of the negative electrode sheet forming unit 76, which will not be described redundantly.

The laminar sheet forming unit 78 has a pair of laminating rollers 170, and a take-up roller 172. The two laminating rollers 170 are held in rolling contact with each other at their outer circumferential surfaces, such that the laminating rollers 170 are rotatable in the respective opposite directions, by an electric motor not shown, for instance.

The desired lithium-ion secondary battery 10 is produced by using the thus constructed production apparatus 62, in the following manner.

Initially, the leading portion of the aluminum foil tape 80 extending from the roll installed on the first supply roller 70 is partially wound on the first and second feeding rollers 84 and 86 of the positive electrode sheet forming unit 74, in this order of description, such that the opposite surfaces of the aluminum foil tape 80 are held in contact with the outer circumferential surfaces of the respective first and second feeding rollers 84 and 86.

Similarly, the leading portion of the copper foil tape 82 extending from the roll installed on the second supply roller 72 is partially wound on the first and second feeding rollers 94 and 96 of the negative electrode sheet forming unit 76, in this order of description, such that the opposite surfaces of the copper foil tape 82 are held in contact with the outer circumferential surfaces of the respective first and second feeding rollers 94 and 96.

Then, the leading end portions of the aluminum foil tape 80 and the copper foil tape 82 partially wound on the two second feeding rollers 86 and 96 are passed through the nip between the two laminating rollers 170 of the laminar sheet forming unit 78 such that these leading end portions are superposed on each other. Subsequently, the aluminum and copper foil tapes 80 and 82 are fixed at their leading end portions to the take up roller 172 so that the mutually superposed aluminum and copper foil tapes 80 and 82 are wound on the take-up roller 172. These steps are implemented as a preparatory operation for production of the lithium-ion secondary battery 10.

After the preparatory operation, the vacuum pump 68 is operated to evacuate the vacuum chamber 64 to a pressure of about 10⁻⁴-100Pa.

Subsequently, the first feeding rollers 84 and 94 and the second feeding rollers 86 and 96 of the positive and negative electrode sheet forming units 74 and 76, and the take-up roller 172 are rotated to continuously and concurrently feed the respective aluminum and copper foil tapes 80 and 82 from the rolls on the respective first and second supply rollers 70 and 72 toward the take-up roller 172 such that the aluminum and copper foil tapes 80 and 82 are held in rolling contact with the outer circumferential surfaces of the first feeding rollers 84 and 94 and the second feeding rollers 86 and 96 being rotated, while the aluminum and copper foil tapes 80 and 82 are superposed on each other, so that the foil tapes 80 and 82 are continuously taken up by the take-up roller 172.

During continuous feeding of the aluminum and copper foil tapes 80 and 82 in the manner described above, the positive electrode sheet forming unit 74 and the negative electrode sheet forming unit 76 are operated to concurrently form the respective positive and negative electrode sheets 12 and 14. As described above, the positive and negative electrode sheets 12 and 14 are formed in substantially the same process. The following description refers to the method of producing the positive electrode sheet 12, by way of example, and detailed description of the method of forming the negative electrode sheet 14 will be omitted.

Namely, during feeding of the aluminum foil tape 80 by the first feeding roller 84, the mixture of the vapors of the two kinds of material monomer generated in the first and second vapor sources 110 and 112 of the positive electrode vapor-deposited polymer film forming device 104 of the positive electrode active substance layer forming unit 88, and the positive electrode active substance 34 fed from the positive electrode active substance introducing device 106 into the vapor supply pipe 114 together with the carrier gas, is blown from the outlet open end of the vapor supply pipe 114 and deposited onto the aluminum foil tape 80 being fed in rolling contact with the first feeding roller 84, at the predetermined circumferential position of the first feeding roller 84. As a result, the two kinds of material monomer are polymerized into the positive-electrode vapor-deposited polymer film 36 of polyurea continuously formed on the positive electrode collector foil 18 formed of the aluminum foil tape 80, while at the same time the positive electrode active substance 34 is introduced into the positive-electrode vapor-deposited polymer film 36.

Then, the positive-electrode vapor-deposited polymer film 36 containing the positive electrode active substance 34 is irradiated with the ultraviolet radiation generated from the ultraviolet irradiating device 108, so that the polyurea constituting the vapor-deposited polymer film 36 is transformed into polyaniline. Thus, the positive electrode active substance layer 20 formed of the positive-electrode vapor-deposited polymer film 36 of polyaniline containing the positive electrode active substance 34 is laminated integrally on the positive electrode collector foil 18 formed of the aluminum foil tape 80.

It is noted that the mixture of the vapors of the two kinds of material monomer and the positive electrode active substance 34 is intermittently blown onto one of the opposite surfaces of the aluminum foil tape 80, by the automatic alternate opening and closing actions of the above-described shut-off valve 123 at the predetermined time interval. It is also noted that the above-indicated mixture is intermittently blown onto the other surface of the aluminum foil tape 80, by the automatic alternate opening and closing action of the shut-off valve 123 as described below.

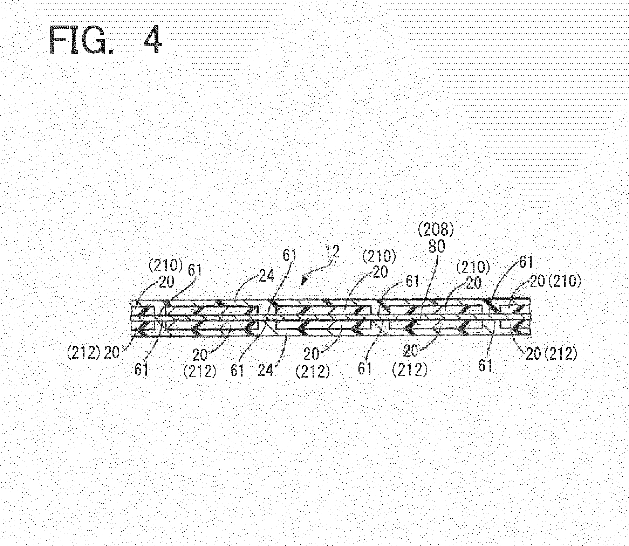

Accordingly, segments of the positive electrode active substance layer 20 are laminated on the opposite surfaces of the aluminum foil tape 80, such that the segments are spaced apart from each other by a predetermined spacing distance in the direction of length (in the direction of feeding) of the aluminum foil tape 80, as shown in Fig. 4, such that the corresponding segments on the opposite surfaces of the aluminum foil tape 80 are located at the same position in the longitudinal direction, and such that the aluminum foil tape 80 is provided with active-substance-free portions 61 each formed between the adjacent segments of the positive electrode active substance layer 20 laminated on each of the opposite surfaces of the aluminum foil tape 80. Namely, the positive electrode active substance layer 20 is absent in the active-substance-free portions 61. In the present embodiment, the mixture of the two kinds of material monomer and the positive electrode active substance 34 is blown onto only a widthwise central or intermediate portion of each of the opposite surfaces of the aluminum foil tape 80, so that the positive-electrode vapor-deposited polymer film 36 is not formed in the widthwise end portions of the opposite surfaces of the aluminum foil tape 80, but is formed in only the widthwise central portions.

Subsequently, the mixture of the vapors of the three kinds of material monomer generated in the first, second and third vapor sources 132, 134 and 136 of the first inner vapor-deposited polymer film forming unit 90, and the lithium-ion conductivity rendering substance 152 fed from the lithium salt introducing device 130 into the vapor supply pipe 138 together with the carrier gas, is continuously blown from the outlet open end of the vapor supply pipe 138 and deposited onto the positive electrode active substance layer 20 formed on one of the opposite surfaces of the aluminum foil tape 80 being fed in rolling contact with the first feeding roller 84.

As a result, the three kinds of material monomer are polymerized into the first inner vapor-deposited polymer film 42 formed of polyurea having the repeating unit structure of polyethylene oxide and the functional group including the element of high electronegativity, on the positive electrode active substance layer 20 formed on the aluminum foil tape 80, while at the same time the lithium-ion conductivity rendering substance 152 is introduced into the first inner vapor-deposited polymer film 42. Thus, the first inner vapor-deposited polymer film 42 formed of polyurea having the lithium-ion conductivity and the functional group including the element of high electronegativity is laminated integrally on the positive electrode active substance layer 20 laminated on one of the opposite surfaces of the positive electrode collector foil 18 formed of the aluminum foil tape 80.

In the present process, the three kinds of material monomer are blown not only on the positive electrode active substance layer 20, but also on the active-substance-free portions 61 not covered by the positive electrode active substance layer 20, and two width portions of the aluminum foil tape 80 on the respective opposite sides of the positive electrode active substance layer 20, which two width portions are spaced apart from each other in the width direction of the aluminum foil tape 80 and which do not include one widthwise end portion of the aluminum foil tape 80. Accordingly, the first inner vapor-deposited polymer film 42 is laminated integrally on the entire area of one of the opposite surfaces of the aluminum foil tape 80 except the above-indicated one widthwise end portion.

Then, the mixture of the vapors of the three kinds of material monomer generated in the first, second and third vapor sources 132, 134 and 136 of the first outer vapor-deposited polymer film forming unit 92, and the lithium-ion conductivity rendering substance 152 fed from the lithium salt introducing device 156 into the vapor supply pipe 138 together with the carrier gas, is blown from the outlet open end of the vapor supply pipe 138 and deposited on the first inner vapor-deposited polymer film 42 formed on the positive electrode active substance layer 20 formed on the aluminum foil tape 80 moving in rolling contact with the outer circumferential surface of the first feeding roller 84.

As a result, the first outer vapor-deposited polymer film 44 consisting of the polyurea having the repeating unit structure of polyethylene oxide is formed on the first inner vapor-deposited polymer film 42, by polymerization of the three kinds of material monomer, while at the same time the lithium-ion conductivity rendering substance 152 is introduced into the first outer vapor-deposited polymer film 44. Thus, the first outer vapor-deposited polymer film 44 formed of the polyurea having the lithium-ion conductivity is laminated integrally on the first inner vapor-deposited polymer film 42 formed on the positive electrode active substance layer 20 formed on the positive electrode collector foil 18 formed of the aluminum foil tape 80. In the present process, the first outer vapor-deposited polymer film 44 is laminated integrally on the entire area of the surface of the first inner vapor-deposited polymer film 42 remote from the positive electrode active substance layer 20.

As described above, the segments of the positive electrode active substance layer 20, and the first inner and outer vapor-deposited polymer films 42 and 44 constituting the first solid electrolyte layer 24 are integrally laminated in this order of description on one of the opposite surfaces of the positive electrode collector foil 18 formed of the aluminum foil tape 80. The positive electrode collector foil 18 on which the positive electrode active substance layer 20 and the first inner and outer vapor-deposited polymer films 42 and 44 have been formed is fed from the first feeding roller 84 toward the second feeding roller 86. The segments of the positive electrode active substance layer 20 are formed in the widthwise central portion of the above-indicated one surface of the positive electrode collector foil 18, at a predetermined spacing interval in the longitudinal direction of the aluminum foil tape 80, while the first solid electrolyte layer 24 is formed continuously on the entire area of the above-indicated surface of the positive electrode collector foil 18 except the above-indicated one widthwise end portion.

Then, the positive electrode active substance layer 20 and the first solid electrolyte layer 24 are laminated in the same manner as described above, integrally on the other surface of the positive electrode collector foil 18 remote from the outer circumferential surface of the second feeding roller 86, while the positive electrode collector foil 18 is fed by the second feeding roller 86 such that the above-indicated one surface of the collector foil 18 on which the positive electrode active substance layer 20 and the first solid electrolyte layer 24 have been formed is held in rolling contact with the outer circumferential surface of the second feeding roller 86.

As described above, the positive electrode sheet 12 is continuously formed by laminating the positive electrode active substance layer 20 and the first solid electrolyte layer 24 consisting of the first inner and outer vapor-deposited polymer films 42 and 44, in this order of description, integrally on each of the opposite surfaces of the positive electrode collector foil 18 formed of the aluminum foil tape 80. The thus formed positive electrode sheet 12 is continuously fed from the second feeding roller 86 toward the laminar sheet forming unit 78. In this respect, it is noted that the segments of the positive electrode active substance layer 20 and the first solid electrolyte layer 24 formed on one of the opposite surfaces of the positive electrode sheet 12 are located at the same positions in the width direction of the positive electrode sheet 12, as those formed on the other surface of the positive electrode sheet 12, so that one of the widthwise opposite end portions of the positive electrode collector foil 18 extends from the corresponding widthwise end face of the positive electrode sheet 12, while the four end faces of each segment of the positive electrode active substance layer 20 are covered by the first solid electrolyte layer 24, as shown in Figs. 2 and 4.

While the positive electrode sheet 12 is continuously formed by the positive electrode sheet forming unit 74 as described above, the negative electrode sheet 14 is continuously formed by the negative electrode sheet forming unit 76 in substantially the same manner of formation of the positive electrode sheet 12. Namely, segments of the negative electrode active substance layer 28 and the second solid electrolyte layer 32 are laminated integrally on each of the opposite surfaces of the negative electrode collector foil 26 formed of the copper foil tape 82, in substantially the same manner of lamination of the positive electrode active substance layer 20 and the first solid electrolyte layer 24 of the positive electrode sheet 12, whereby the negative electrode sheet 14 is formed. The thus formed negative electrode sheet 14 is continuously fed from the second feeding roller 96 toward the laminar sheet forming unit 78.

Subsequently, the positive and negative electrode sheets 12 and 14 fed to the laminar sheet forming unit 78 are passed through the nip between the pair of laminating rollers 170, so that the positive and negative electrode sheets 12 and 14 are superposed or laminated on each other, with the first and second solid electrolyte layers 24 and 32 being held in contact with each other, such that the active-substance-free portions 61 of the positive electrode collector foil 18 and the active-substance-free portions 61 of the negative electrode collector foil 26 are aligned with each other (such that the segments of the positive electrode active substance layer 20 and the segments of the negative electrode active substance layer 28 are aligned with each other). Thus, the laminar sheet 16 in the form of a tape is obtained, and is wound as a roll on the take-up roller 172. It is noted that the positive electrode sheet 12 and the negative electrode sheet 14 are preferably superposed on each other such that these electrode sheets 12 and 14 are offset with respect to each other in the width direction.

The thus produced tape of the laminar sheet 16 is fed from the roll on the take-up roller 172, and is cut into pieces at the positions of the tapes 80 and 82 corresponding to the active-substance-free portions 61 of the positive and negative electrode collector foils 18 and 26. Each of the thus obtained pieces is the lithium-ion secondary battery 10 in the form of a laminar body consisting of the laminar sheets 16 having a structure shown in Fig. 1. The lithium-ion secondary battery 10 is generally used as a battery pack having a construction as shown in Fig. 2 by way of example.

It will be understood from the foregoing description of the present embodiment that a step of forming the positive electrode sheet 12 and the negative electrode sheet 14 and a step of superposing these positive and negative electrode sheets 12 and 14 to produce the laminar sheet 16 are continuously performed as a series of operations within the vacuum chamber 64, for continuously producing the desired lithium-ion secondary battery 10 in a roll-to-roll transferring fashion, so that the productivity of the lithium-ion secondary battery 10 can be significantly and effectively improved.

Further, the present lithium-ion secondary battery 10 in which the plurality of laminar sheets 16 are laminated on each other does not have portions in which the two positive electrode collector foils 18 are superposed on each other, or portions in which the two negative electrode collector foils 26 are superposed on each other, unlike a lithium-ion secondary battery consisting of a plurality of laminar sheets each consisting of a positive electrode sheet in which a positive electrode active substance layer and a first solid electrolyte layer are integrally laminated on only one of the opposite surfaces of a positive electrode collector foil, and a negative electrode sheet in which a negative electrode active substance layer and a second solid electrolyte layer are integrally laminated on only one of the opposite surfaces of a negative electrode collector foil. Accordingly, the amount of the positive electrode collector foils 18 and the negative electrode collector foils 26 required for the present lithium-ion secondary battery 10 can be effectively reduced, so that the required material cost can be effectively reduced.

The present lithium-ion secondary battery 10 is further configured such that the positive and negative electrode active substance layers 20 and 28 and the first and second solid electrolyte layers 24 and 32 are constituted by the positive-electrode vapor-deposited polymer film 36, the negative-electrode vapor-deposited polymer film 40, the first inner and outer vapor-deposited polymer films 42 and 44, and the second inner and outer vapor-deposited polymer films 46 and 48, which are formed of polyaniline or polyurea having a high degree of flexibility or plasticity. Accordingly, the lithium-ion secondary battery 10 does not have any gaps preventing movements of lithium ions during its charging and discharging, between the positive electrode collector foil 18 and the positive electrode active substance layer 20, between the positive electrode active substance layer 20 and the first solid electrolyte layer 24, between the negative electrode collector foil 26 and the negative electrode active substance layer 28, and between the negative electrode active substance layer 28 and the second solid electrolyte layer 32. Accordingly, interface resistances between the first solid electrolyte layer 24 and the positive electrode active substance layer 20, and between the second solid electrolyte layer 32 and the negative electrode active substance layer 28 can be effectively reduced, resulting in an extremely advantageous improvement of the cell performance of the lithium-ion secondary battery 10. In addition, the lithium-ion secondary battery 10 as a whole exhibits an adequate degree of flexibility or plasticity, and an accordingly high degree of bending or flexural strength. Accordingly, the lithium-ion secondary battery 10 has an effectively improved ease of handling.

In the present lithium-ion secondary battery 10, a lamination boundary 50 is formed between the first and second solid electrolyte layers 24 and 32 which are laminated on each other. During charging and discharging of the lithium-ion secondary battery 10, however, substantially no movements of the lithium ions take place between the first and second solid electrolyte layers 24 and 32, so that the cell performance is not lowered in the presence of the lamination boundary 50.

The present embodiment is also configured such that the positive and negative electrode active substance layers 20 and 28, and the first and second solid electrolyte layers 24 and 32 are formed by the vapor-deposition polymerization process, so that each of the positive electrode active substance layer 20, first solid electrolyte layer 24, negative electrode active substance layer 28 and second solid electrolyte layer 32 can be formed with a sufficiently small thickness with a high degree of uniformity, on the opposite surfaces of the positive electrode collector foil 18 and the negative electrode collector foil 26, even where the surfaces of these collector foils 18 and 26 are not sufficiently flat, in the presence of local recessed and raised portions formed therein or thereon, for instance. Therefore, irrespective of the condition of the surfaces of the positive and negative electrode collector foils 18 and 26, the present lithium-ion secondary battery 10 has a high degree of stability of its cell performance, with effective reduction of its size and significant improvement of its output density and freedom from its geometrical restrictions.

Further, the vapor-deposition polymerization process employed to form the positive and negative electrode active substance layers 20 and 28 and the first and second solid electrolyte layers 24 and 32 is a vacuum dry process, so that there is no need to use a device for drying the positive and negative electrode active substance layers 20 and 28 and the first and second solid electrolyte layers 24 and 32 after these layers are formed, and it is possible to accordingly simplify the required production apparatus and to reduce its size, resulting in advantageous reduction of the running cost of the production apparatus. In addition, the elimination of the drying step and the vapor-deposition polymerization process which permits a sufficiently high rate of film formation assure extremely effective reduction of the required cycle time of production of the lithium-ion secondary battery 10, so that the desired lithium-ion secondary battery 10 can be efficiently produced at a sufficiently reduced cost according to the present embodiment.

Further, the present lithium-ion secondary battery 10 is configured such that the first inner vapor-deposited polymer film 42 constituting a portion of the first solid electrolyte layer 24 on the side of the positive electrode active substance layer 20, and the second inner vapor-deposited polymer film 46 constituting a portion of the second solid electrolyte layer 32 on the side of the negative electrode active substance layer 28 are formed of polyurea having the functional group including an element of high electronegativity, so that lithium ions exist with a higher density in the inner portions of the first and second solid electrolyte layers 24 and 32 on the side of the positive and negative electrode active substance layers 20 and 28, whereby the cell performance is further improved.

The present lithium-ion secondary battery 10 is produced by cutting the tape of the laminar sheet 16 into pieces, at the active-substance-free portions 61 of the positive electrode collector foil 18 and the active-substance-free portions 61 of the negative electrode collector foil 26, which are aligned with each other in the longitudinal direction of the tape. Accordingly, it is possible to effectively prevent short-circuiting between the positive electrode 22 and the negative electrode 30, during cutting of the tape of the laminar sheet 16, so that the lithium-ion secondary battery 10 has a high degree of stability of its cell performance.

Although the present lithium-ion secondary battery 10 is configured such that the lithium ions exist with a higher density in the inner portions of the first and second solid electrolyte layers 24 and 32 on the side of the positive and negative electrode active substance layers 20 and 28, the lithium-ion secondary battery 10 may be further configured such that anions exist with a sufficiently low density in those inner portions of the first and second solid electrolyte layers 24 and 32, in order to effectively prevent the anions from disturbing the movements of the lithium ions between the positive electrode active substance 34 in the positive electrode active substance layer 20 and the first solid electrolyte layer 24, and between the negative electrode active substance 38 in the negative electrode active substance layer 28 and the second solid electrolyte layer 32, for thereby further improving the cell performance.

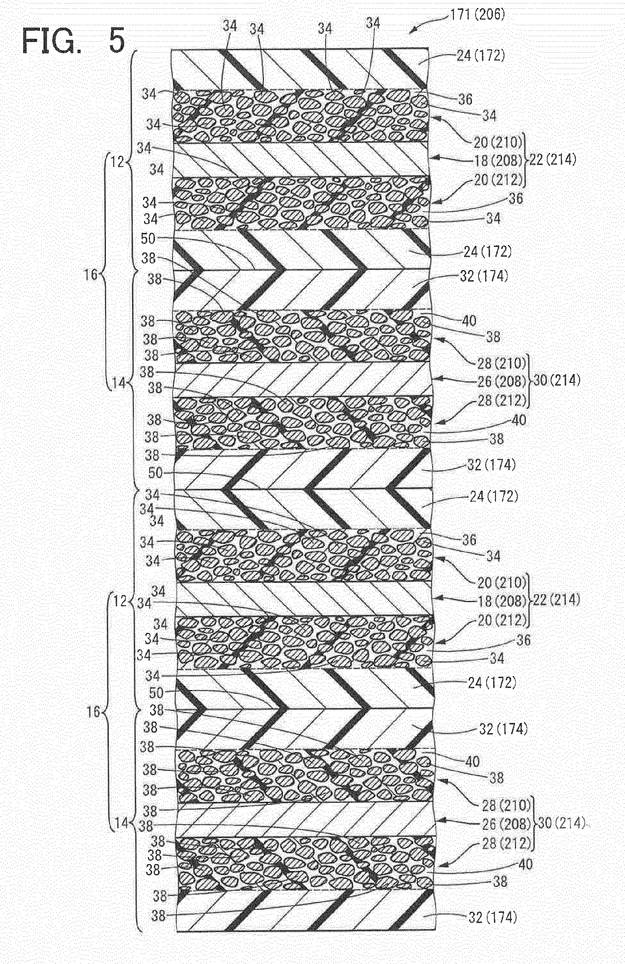

In the present embodiment, the first solid electrolyte layer 24 has a two-layer structure consisting of the first inner vapor-deposited polymer film 42 and the first outer vapor-deposited polymer film 44, while the second solid electrolyte layer 32 has a two-layer structure consisting of the second inner vapor-deposited polymer film 46 and the second outer vapor-deposited polymer film 48. However, the lithium-ion secondary battery 10 may be replaced by a lithium-ion secondary battery 171 shown in Fig. 5, wherein the first solid electrolyte layer 24 is a single-layer structure consisting solely of a positive electrode vapor-deposited polymer film 172 formed integrally on the positive electrode active substance layer 20 by the vacuum vapor-deposition polymerization process, while the second solid electrolyte layer 32 has a single-layer structure consisting solely of a negative electrode vapor-deposited polymer film 174 formed integrally on the negative electrode active substance layer 28 by the vacuum vapor-deposition polymerization process. In this modified embodiment of the invention, the lithium ions and the anions are distributed evenly in the first and second solid electrolyte layers 24 and 32, such that those ions exist with a substantially the same density in the thickness portions of the first solid electrolyte layer 24 relatively adjacent to and remote from the positive electrode active substance layer 20, and in the thickness portions of the second solid electrolyte layer 32 relatively adjacent to and remote from the negative electrode active substance layer 28.

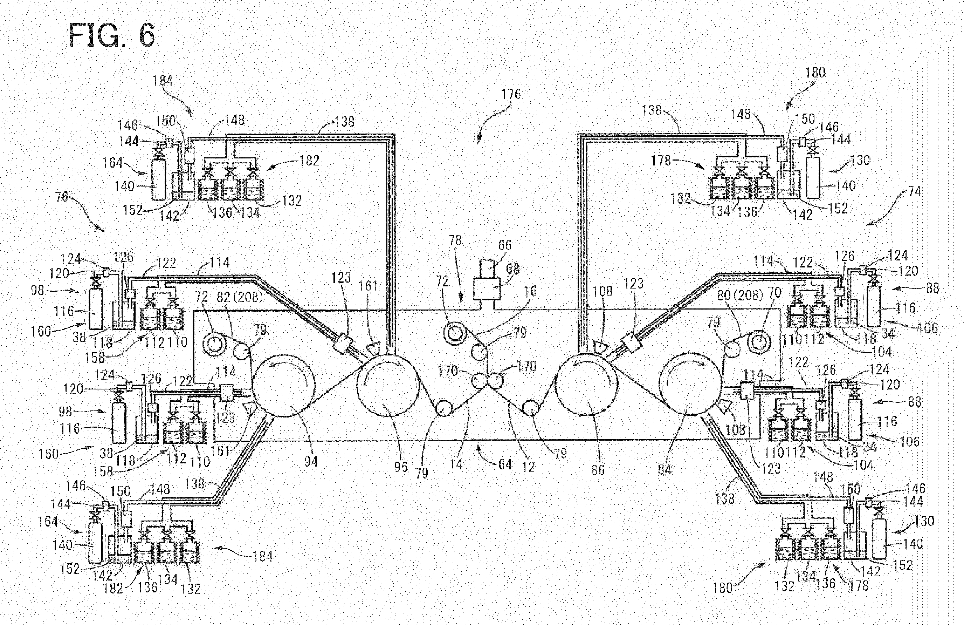

The lithium-ion secondary battery 171 wherein the first solid electrolyte layer 24 consists solely of the positive electrode vapor-deposited polymer film 172 while the second solid electrolyte layer 32 consists solely of the negative electrode vapor-deposited polymer film 174 is produced by using a production apparatus 176 constructed as shown in Fig. 6, in substantially the same manner as described above with respect to the production of the lithium-ion secondary battery 10 according to the first embodiment.

The production apparatus 176 used to produce the present lithium-ion secondary battery 171 includes a positive electrode vapor-deposited polymer film forming unit 180, and a negative-electrode vapor-deposited polymer film forming unit 184. The positive electrode vapor-deposited polymer film forming unit 180 consists of a positive electrode vapor-deposited polymer film forming device 178 and the lithium salt introducing device 130, while the negative electrode vapor-deposited polymer film forming unit 184 consists of a negative electrode vapor-deposited polymer film forming device 182 and the lithium salt introducing device 164. The positive electrode vapor-deposited polymer film forming device 178 and the lithium salt introducing device 130 of the positive electrode vapor-deposited polymer film forming unit 180 have the same constructions as the first inner vapor-deposited polymer film forming device 128 and the lithium salt introducing device 130 of the first inner vapor-deposited polymer film forming unit 90 in the production apparatus 62 used to produce the lithium-ion secondary battery 10 according to the first embodiment, and the negative electrode vapor-deposited polymer film forming device 182 and the lithium salt introducing device 164 of the negative electrode vapor-deposited polymer film forming unit 184 have the same constructions as the second inner vapor-deposited polymer film forming device 162 and the lithium salt introducing device 164 of the second inner vapor-deposited polymer film forming unit 100 in the production apparatus 62. The components of the present production apparatus 176 other than the positive electrode and negative electrode vapor-deposited polymer film forming units 180 and 184 are identical in construction with those of the production apparatus 62, and are denoted in Fig. 6 by the same reference signs as used in Fig. 3. Those components will not be described redundantly.

As previously described, the first and second solid electrolyte layers 24 and 32 are formed of the "resin A" which has a repeating unit structure of polyethylene oxide, which contains a lithium salt in polyethylene oxide, and which can be formed into a film by the vapor-deposition polymerization process, or the "resin B" which contains a lithium salt, a side chain of which is bonded to a sulfonic acid group, and which can be formed into a film by the vapor-deposited polymerization process. Therefore, the first and second solid electrolyte layers 24 and 32 can be formed by the production apparatus 176 in the following manner. These first and second solid electrolyte layers 24 and 32 can be formed in the same process by the positive electrode sheet forming unit 74 and the negative electrode sheet forming unit 76 which are identical in construction with each other. For this reason, the formation of only the first solid electrolyte layer 24 will be described.

In the case of formation of the first solid electrolyte layer 24 of polyurea in the form of the resin A, for example, the monomer reservoirs of the first and second vapor sources 132 and 134 of the positive electrode vapor-deposited polymer film forming device 178 of the positive electrode vapor-deposited polymer film forming unit 180 respectively accommodate the material monomer consisting of ethylene glycol diamine such as diethylene glycol bis(3-aminopropyl) ether, and the material monomer consisting of aromatic diisocyanate such as m-xylylene diisocyanate, at least one of which has a side chain bonded to the repeating unit structure of polyethylene oxide. In this case, the third vapor source 136 is not used.

The vapors of the material monomers generated in the respective first and second vapor sources 132 and 134 are polymerized on the positive electrode active substance layer 20 formed on the aluminum foil tape 80 being moved in rolling contact with the outer circumferential surface of the first feeding roller 84 within the vacuum chamber 64, to form the positive electrode vapor-deposited polymer film 172, while at the same time the powdered lithium-ion conductivity rendering substance 152 in the form of a lithium salt is introduced by the lithium salt introducing device 130 into the positive electrode vapor-deposited polymer film 172. Thus, the positive electrode vapor-deposited polymer film 172 having the repeating unit structure of polyethylene oxide and containing the lithium salt in polyethylene oxide is formed on the positive electrode active substance layer 20 formed on the aluminum foil tape 80, whereby the first solid electrolyte layer 24 is laminated integrally on the positive electrode active substance layer 20.

In the case of formation of the first solid electrolyte layer 24 of polyurea in the form of the resin B, for example, the monomer reservoirs of the first and second vapor sources 132 and 134 of the positive electrode vapor-deposited polymer film forming device 178 of the positive electrode vapor-deposited polymer film forming unit 180 respectively accommodate the material monomer consisting of ethylene glycol diamine such as diethylene glycol bis(3-aminopropyl) ether, and the material monomer consisting of aromatic diisocyanate such as m-xylylene diisocyanate, at least one of which has a side chain bonded to a sulfonic acid group. In this case, the third vapor source 136 is not used, either.

The vapors of the material monomers generated in the respective first and second vapor sources 132 and 134 are polymerized on the positive electrode active substance layer 20 formed on the aluminum foil tape 80 being moved in rolling contact with the outer circumferential surface of the first feeding roller 84 within the vacuum chamber 64, to form the positive electrode vapor-deposited polymer film 172, while at the same time the powdered lithium-ion conductivity rendering substance 152 in the form of the lithium salt is introduced by the lithium salt introducing device 130 into the positive electrode vapor-deposited polymer film 172. Thus, the positive electrode vapor-deposited polymer film 172 containing the lithium salt and having a side chain bonded to a sulfonic acid group is formed on the positive electrode active substance layer 20, whereby the first solid electrolyte layer 24 is laminated integrally on the positive electrode active substance layer 20.

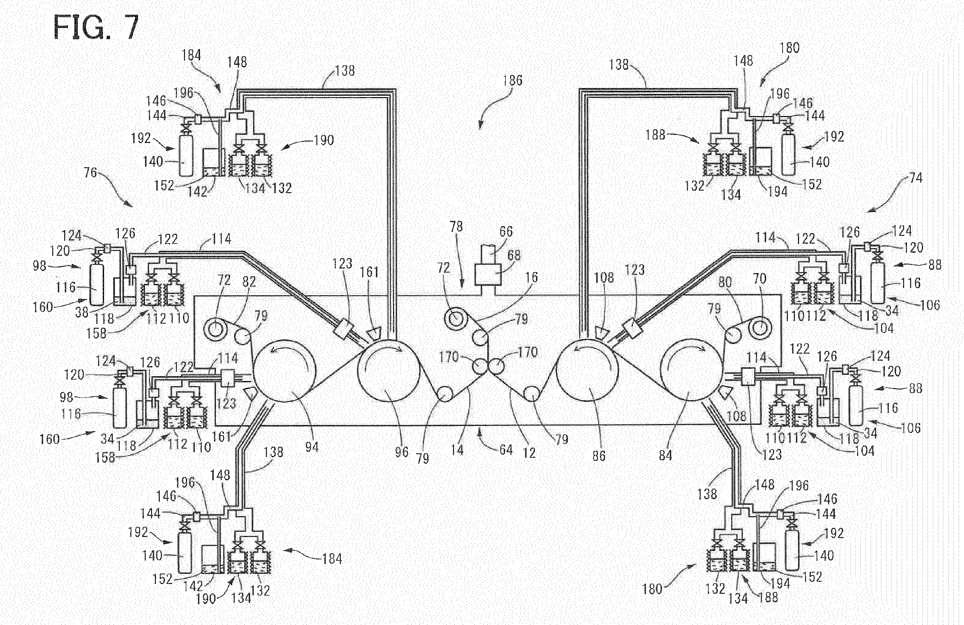

By the way, the kind of the lithium-ion conductivity rendering substance 152 is not particularly limited, provided this substance 152 can literally render lithium-ion conductivity to the first and second solid electrolyte layers 24 and 32, when the substance 152 is contained in these solid electrolyte layers 24 and 32. Hence, it is possible to use, as the lithium-ion conductivity rendering substance 152, an ion-conductive polymer in which a lithium salt is dissolved. Where this ion-conductive polymer is used, the desired lithium-ion secondary battery 171 can be produced by using a production apparatus 186 constructed as shown in Fig. 7 according to a third embodiment of this invention, for example.

As shown in Fig. 7, the production apparatus 186 is identical in construction with the production apparatus 176 of the second embodiment shown in Fig. 6, except in the construction of the positive electrode and negative electrode vapor-deposited polymer film forming units 180 and 184. Since these vapor-deposited polymer film forming units 180 and 184 are identical in construction with each other, only the positive electrode vapor-deposited polymer film forming unit 180 will be described in connection with the production apparatus 186.

Namely, the positive electrode vapor-deposited polymer film forming unit 180 of the production apparatus 186 has a positive electrode vapor-deposited polymer film forming device 188 which is not provided with the third vapor source (136). The monomer reservoirs of the first and second vapor sources 132 and 134 of the positive electrode vapor-deposited polymer film forming device 188 respectively accommodate ethylene glycol diamine such as diethylene glycol bis(3-aminopropyl) ether, and aromatic diisocyanate such as m-xylylene diisocyanate, for example, in a liquid state, as the two kinds of material monomer for the positive electrode vapor-deposited polymer film 172 formed of polyuria.

In the positive electrode vapor-deposited polymer film forming device 188, the vapors of the two kinds of material monomer are generated by heating the monomer reservoirs of the first and second vapor sources 132 and 134 by the heaters, and the generated vapors are supplied through the vapor supply pipe 138 into the vacuum chamber 64, and blown onto the positive electrode active substance layer 20 formed on the aluminum foil tape 80 being moved in rolling contact with the outer circumferential surface of the first feeding roller 84.

The production apparatus 186 has a lithium salt introducing device 192 including the gas cylinder 140, the gas supply pipe 144, the mass flow controller 146, a liquid reservoir 194, and a liquid supply pipe 196. The liquid reservoir 194 of the lithium salt introducing device 192 accommodates the lithium-ion conductivity rendering substance 152 consisting of an ion-conductive polymer in a liquid state at the ambient temperature, in which a lithium salt is dissolved. In the third embodiment, oligo-ethylene oxide in which a lithium salt [LiN(SO₂CF₃)₂, for example] is dissolved and which has a low molecular weight of about not more than 700 is used as the lithium-ion conductivity rendering substance 152.

The liquid supply pipe 196 has an outlet end portion inserted into the gas supply pipe 144, which has an outlet end portion which is inserted into and located within the vapor supply pipe 138 of the positive electrode vapor-deposited polymer film forming device 188, so that the outlet end portion of the gas supply pipe 144 is open toward the outer circumferential surfaces of the first feeding roller 84 and the second feeding roller 86, through the outlet end portion of the vapor supply pipe 138.

In the lithium salt introducing device 192 having the structure described above, the carrier gas is fed from the gas cylinder 140 through the gas supply pipe 144, in the open state of the shut-off valve, while the lithium-ion conductivity rendering substance 152 accommodated in a liquid state in the liquid reservoir 194 is sucked into the gas supply pipe 144 through the liquid supply pipe 196, under a reduced pressure generated within the gas supply pipe 144. Further, the liquid lithium-ion conductivity rendering substance 152 is dispersed in a mist state in the carrier gas within the gas supply pipe 144, and is fed into the outlet end portion of the vapor supply pipe 138, together with the carrier gas. Micro particles of the lithium-ion conductivity rendering substance 152 in the mist state are mixed with the vapors of the two kinds of material monomer in the outlet end portion of the vapor supply pipe 138, and a mixture of the particles of the substance 152, the vapors of the two kinds of material monomer and the carrier gas is blown from the outlet open end of the vapor supply pipe 138, onto the aluminum foil tape 80 being moved in rolling contact with the outer circumferential surfaces of the first and second feeding rollers 84 and 86. Thus, the lithium salt introducing device 192 is configured to introduce the lithium-ion conductivity rendering substance 152 into the positive electrode vapor-deposited polymer film 172 formed by the positive electrode vapor-deposited polymer film forming device 188 as described below.

The negative electrode vapor-deposited polymer film forming unit 184 also has a negative electrode vapor-deposited polymer film forming device 190 and the lithium salt introducing device 192, which are identical in construction with the positive electrode vapor-deposited polymer film forming device 188 and the lithium salt introducing device 192 of the positive electrode vapor-deposited polymer film forming unit 180.

The desired lithium-ion secondary battery 171 is produced by the thus constructed production apparatus 186, in the following manner.

After the preparatory operation for production of the lithium-ion secondary battery 10, the steps of forming the positive and negative electrode active substance layers 20 and 28 on the aluminum and copper foil tapes 80 and 82 being moved in rolling contact with the outer circumferential surfaces of the first and second feeding rollers 84, 94 and 86, 96 are performed in the same manner as in the production of the lithium-ion secondary battery 171 by the production apparatus 176 of the second embodiment.

Then, the mixture of the vapors of the two kinds of material monomer generated in the first and second vapor sources 132 and 134, and the lithium-ion conductivity rendering substance 152 blown from the lithium salt introducing device 192 into the vapor supply pipe 138 together with the carrier gas is blown from the outlet open end of the vapor supply pipe 138 onto each of the positive electrode active substance layers 20 formed on the respective opposite surfaces of the aluminum foil tape 80 being moved in rolling contact with the outer circumferential surfaces of the first and second feeding rollers 84 and 86, so as to polymerize the two kinds of material monomer on the positive electrode active substance layer 20, for thereby forming the positive electrode vapor-deposited polymer film 172 of polyurea, while at the same time the lithium-ion conductivity rendering substance 152 is introduced into the positive electrode vapor-deposited polymer film 172, whereby the positive electrode sheet 12 is produced. The negative electrode sheet 14 is produced in the same manner as the positive electrode sheet 12.

The thus produced positive and negative electrode sheets 12 and 14 are superposed or laminated on each other and wound as a roll of the laminar sheet 16, by the laminar sheet forming unit 78. Then, the roll of the laminar sheet 16 is cut in the circumferential direction, to obtain the desired lithium-ion secondary battery 171.

The present third embodiment has substantially the same operational and physical advantages as the first and second embodiments described above.

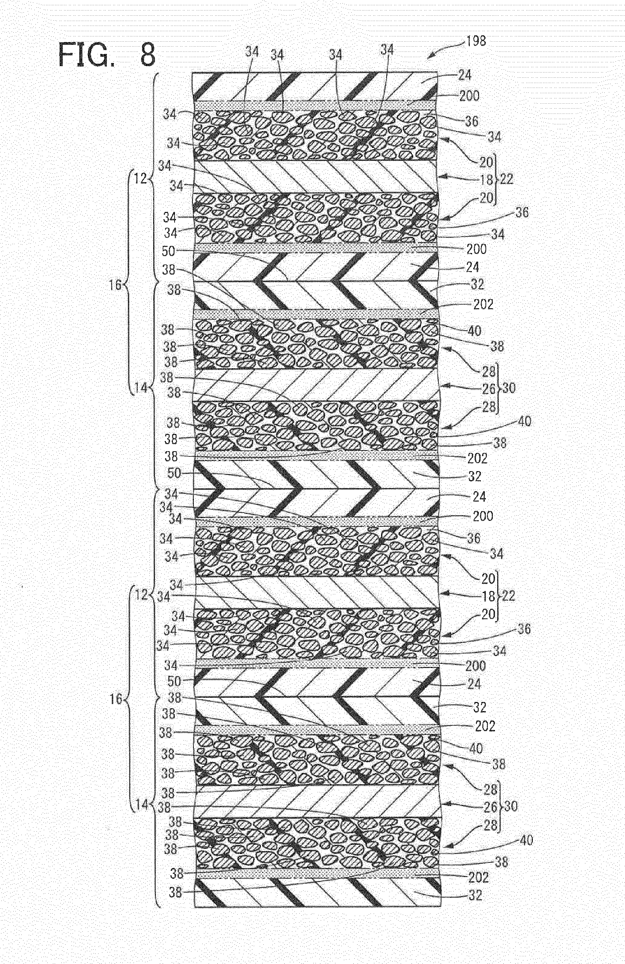

Referring next to the fragmentary longitudinal cross sectional view of Fig. 8, there is shown a lithium-ion secondary battery 198 according to a fourth embodiment of the present invention. As shown in Fig. 8, the lithium-ion secondary battery 198 has a positive-electrode-side mixture layer 200 interposed between each of the positive electrode active substance layers 20 formed on the respective opposite surfaces of the positive electrode collector foil 18, and the corresponding first solid electrolyte layer 24, and a negative-electrode-side mixture layer 202 interposed between each of the negative electrode active substance layers 28 formed on the respective opposite surfaces of the negative electrode collector foil 26, and the corresponding second solid electrolyte layer 32. In the present embodiment, the positive-electrode vapor-deposited polymer film 36 of the positive electrode active substance layer 20, and the negative-electrode vapor-deposited polymer film 40 of the negative electrode active substance layer 28 are formed of polyurethane, and the first solid electrolyte layer 24 is constituted by the positive electrode vapor-deposited polymer film 172 formed of polyurea having a repeating unit structure of polyethylene oxide and containing a lithium salt in polyethylene oxide, while the second solid electrolyte layer 32 is constituted by the negative electrode vapor-deposited polymer film 174 formed of polyurea having a repeating unit structure of polyethylene oxide and containing a lithium salt in the polyethylene oxide.

The positive-electrode-side mixture layer 200 is formed of a mixture of a first polymer of polyurethane used to form the positive electrode active substance layer 20, and a second polymer of polyurea used to form the first solid electrolyte layer 24, while the negative-electrode-side mixture layer 202 is formed of a mixture of a third polymer of polyurethane used to form the negative electrode active substance layer 28, and a fourth polymer of polyurea used to form the second solid electrolyte layer 32. The positive-electrode-side mixture layer 200 and the negative-electrode-side mixture layer 202 also contain the lithium-ion conductivity rendering substance 152 as needed. Those positive-electrode-side and negative-electrode-side mixture layers 200 and 202 are electrically conductive.

In the positive-electrode-side mixture layer 200, the content of polyurethane gradually decreases in the direction from the positive electrode active substance layer 20 toward the first solid electrolyte layer 24, while the content of polyurea gradually increases in the direction from the positive electrode active substance layer 20 toward the first solid electrolyte layer 24. In the negative-electrode-side mixture layer 202, the content of polyurethane gradually decreases in the direction from the negative electrode active substance layer 28 toward the second solid electrolyte layer 32, while the content of polyurea gradually increases in the direction from the negative electrode active substance layer 28 toward the second solid electrolyte layer 32. Namely, the contents of polyurethane and polyurea in the positive-electrode-side mixture layer 200 and the negative-electrode-side mixture layer 202 change linearly in the direction from the positive and negative electrode active substance layers 20 and 28 toward the first and second solid electrolyte layers 24 and 32.

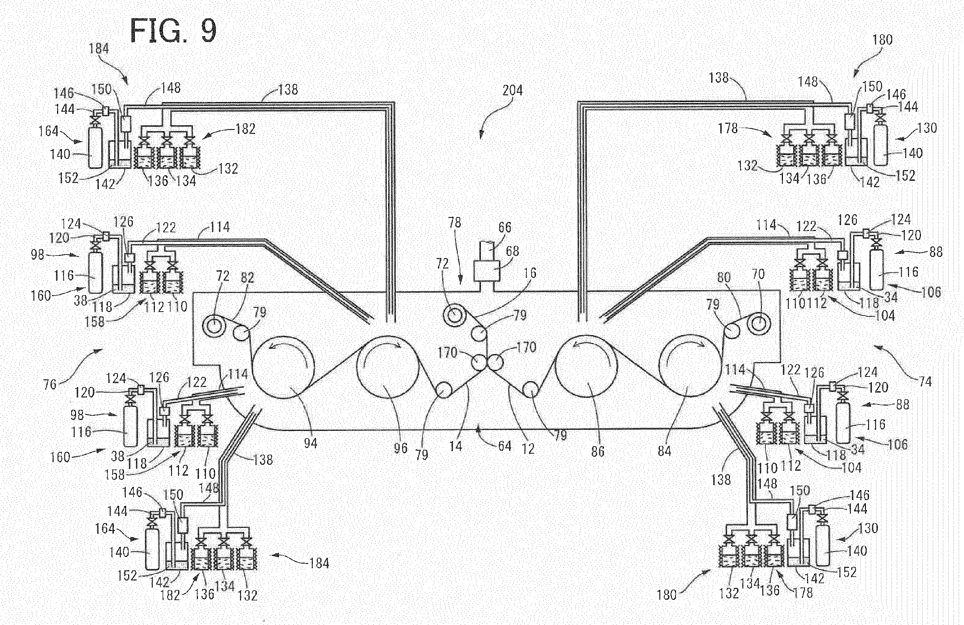

For example, a production apparatus 204 shown in Fig. 9 is suitably used to produce the lithium-ion secondary battery 198 having the structure described above.

In the production apparatus 204, each of the vapor supply pipes 114 of the two positive electrode active substance layer forming units 88, and each of the vapor supply pipes 138 of the two positive electrode vapor-deposited polymer film forming units 180 are positioned such that the vapor supply pipes 114 and 138 are open at their outlet ends toward the outer circumferential surfaces of the first and second feeding rollers 84 and 86, as shown in Fig. 9. Similarly, each of the vapor supply pipes 114 of the two negative electrode active substance layer forming units 98, and each of the vapor supply pipes 138 of the two negative electrode vapor-deposited polymer film forming units 184 are positioned such that the vapor supply pipes 114 and 138 are open at their outlet ends toward the outer circumferential surfaces of the first and second feeding rollers 94 and 96. Each of the vapor supply pipes 114 is not provided at its outlet end portion with the shut-off valve 123. In the other aspects, the present production apparatus 204 is identical in construction with the production apparatus 176 shown in Fig. 6.

The desired lithium-ion secondary battery 198 is produced by using the thus constructed production apparatus 204, in the following manner.

Initially, the preparatory operation is carried out in the manner described above, and the vacuum chamber 64 is evacuated. On the other hand, the material monomers accommodated in the monomer reservoirs provided in each positive electrode active substance layer forming unit 88, each negative electrode active substance layer forming unit 98, each positive electrode vapor-deposited polymer film forming unit 180 and each negative electrode vapor-deposited polymer film forming unit 184 are heated, whereby the material monomers are vaporized.

The monomer reservoirs of the positive and negative electrode active substance layer forming units 88 and 98 respectively accommodate, as the material monomers, aromatic diol such as 1,3-dihydroxyl benzene in a liquid state, for example, and aromatic diisocyanate such as 1,4-phenylene diisocyanate in a liquid state, for example. The monomer reservoirs of the positive and negative vapor-deposited polymer film forming units 180 and 184 respectively accommodate ethylene glycol diamine such as diethylene glycol bis(3-aminopropyl) ether, aromatic diisocyanate such as m-xylylene diisocyanate, and olygo-ethylene oxide in a liquid or solid state, for example.

After the pressure within the vacuum chamber 64 has been adjusted to the predetermined level, the shut-off valves provided in the positive electrode active substance layer forming unit 88 positioned adjacent to the first feeding roller 84 of the positive electrode sheet forming unit 74 (that is, the shut-off valves provided at the connections of the monomer reservoirs to the vapor supply pipe 114, and the shut-off valve provided in the gas cylinder 116 of the positive electrode active substance introducing device 106) are opened by a predetermined amount so that the mixture of the vapors of the two kinds of material monomer and the positive electrode active substance 34 is blown onto one of the opposite surfaces of the aluminum foil tape 80 being moved in rolling contact with the outer circumferential surface of the first feeding roller 84.

After a predetermined length of time has passed, the amount of opening of the shut-off valves of the vapor supply pipe 114 and the shut-off valve of the gas cylinder 116 is gradually reduced to zero. Thus, the mixture of the vapors of the two kinds of material monomer and the positive electrode active substance 34 is supplied from the positive electrode active substance layer forming unit 88 into the vacuum chamber 64 (that is, the mixture is blown onto the aluminum foil tape 80 being moved in rolling contact with the outer circumferential surface of the first feeding roller 84), at a predetermined rate of supply for the predetermined length of time, and the rate of supply is gradually reduced to zero. In this respect, it is noted that the shut-off valve of the gas cylinder 116 may be fully closed at a moment of initiation of the closing actions of the shut-off valves of the vapor supply pipe 114.

At the moment of initiation of the closing action of each of the shut-off valves of the positive electrode active substance layer forming unit 88, or immediately before or after this moment of initiation, the shut-off valves provided in the positive electrode vapor-deposited polymer film forming unit 180 positioned adjacent to the first feeding roller 84 (that is, the shut-off valves provided at the connections of the monomer reservoirs to the vapor supply pipe 138) are opened such that the amount of opening is gradually increased to a predetermined value. After a predetermined length of time has passed, the shut-off valves of the positive electrode vapor-deposited polymer film forming unit 180 are closed. Thus, the rate of supply of the three kinds of material monomer from the positive electrode vapor-deposited polymer film forming unit 180 into the vacuum chamber 64 is gradually increased to a predetermined value. Then, the rate of supply is reduced to zero. In this respect, it is desirable to adjust the rate of closing of the shut-off valves of the positive electrode active substance layer forming unit 88 and the rate of opening of the shut-off valves of the positive electrode vapor-deposited polymer film forming unit 180, so that the pressure within the vacuum chamber 64 is kept constant as much as possible.

While only the shut-off valves of the positive electrode active substance layer forming unit 88 are kept open by the predetermined amount as described above, polyurethane is generated on one of the opposite surfaces of the aluminum foil tape 80, whereby the positive electrode active substance layer 20 of polyurethane is formed on one of the opposite surfaces of the positive electrode collector foil 18. It is noted that the length of time during which the shut-off valves of the positive electrode active substance layer forming unit 88 are kept by the predetermined amount is suitably determined depending upon the thickness of the positive electrode active substance layer 20 to be formed.

Then, the shut-off valves of the positive electrode active substance layer forming unit 88 are gradually closed, while at the same time the shut-off valves of the positive electrode vapor-deposited polymer film forming unit 180 are gradually opened, so that the rate of generation of polyurethane on the positive electrode active substance layer 20 of the predetermined thickness is gradually reduced while the rate of generation of polyurea on the positive electrode active substance layer 20 is gradually increased. Subsequently, the amount of opening of the shut-off valves of the positive electrode vapor-deposited polymer film forming unit 180 is kept at a predetermined value for a predetermined length of time, so that the rate of generation of polyurea is kept at a predetermined value.

During a time period from the moment of initiation of the closing actions of the shut-off valves of the positive electrode active substance layer forming unit 88 to the moment at which the shut-off valves are fully closed so that the amounts of the two kinds of material monomer to be supplied from the positive electrode active substance layer forming unit 88 into the vacuum chamber 64 and left within the vacuum chamber 64 are eventually reduced to zero, the polymerization reaction of these two kinds of material monomer and the polymerization reaction of the three kinds of material monomer supplied from the positive electrode vapor-deposited polymer film forming unit 180 take place concurrently to form the positive-electrode-side mixture layer 200 having the structure described above on the positive electrode active substance layer 20. Subsequently, the amount of opening of the shut-off valves of the positive electrode vapor-deposited polymer film forming unit 180 is kept at a predetermined value for a predetermined length of time, so that the positive electrode vapor-deposited polymer film 172 (first solid electrolyte layer 24) having a predetermined thickness is laminated on the positive-electrode-side mixture layer 200.

After the positive electrode active substance layer 20, positive-electrode-side mixture layer 200 and first solid electrolyte layer 24 have been laminated integrally on one of the opposite surfaces of the aluminum foil tape 80 as described above, the aluminum foil tape 80 is partially wound on the second feeding roller 86 such that the surface of the aluminum foil tape 80 on which the layers 24, 200 and 24 have been laminated is in rolling contact with the outer circumferential surface of the second feeding roller 86, and so that the positive electrode active substance layer 20, positive-electrode-side mixture layer 200 and first solid electrolyte layer 24 are laminated integrally on the other of the opposite surfaces of the aluminum foil tape 80, in the same manner as described above. Thus, the positive electrode sheet 12 is continuously formed.

Concurrently with the continuous formation of the positive electrode sheet 12, the negative electrode active substance layer 28, negative-electrode-side mixture layer 202 and second solid electrolyte layer 32 are laminated integrally on each of the opposite surfaces of the copper foil tape 86, in this order of description, so that the negative electrode sheet 14 is continuously formed. This negative electrode sheet 14 is formed by using the negative electrode active substance layer forming units 98 and the negative electrode vapor-deposited polymer film forming units 184, in substantially the same manner as described above with respect to the positive electrode sheet 12.

Subsequently, the positive electrode sheet 12 and the negative electrode sheet 14 are laminated on each other by the laminar sheet forming unit 78, and wound as a roll of the laminar sheet 16. Then, the roll of the laminar sheet 16 is cut in the circumferential direction, to obtain the desired lithium-ion secondary battery 198.

It will be understood from the foregoing description of the fourth embodiment that this embodiment has substantially the same operational and physical advantages as the several preceding embodiments.

The present fourth embodiment is configured to form the positive-electrode-side mixture layers 200 between the positive electrode active substance layers 20 and the first solid electrolyte layers 24, and the negative-electrode-side mixture layers 202 between the negative electrode active substance layers 28 and the second solid electrolyte layers 32, in the vacuum chamber 64 in a roll-to-roll transferring fashion. Accordingly, the positive and negative electrode active substance layers 20 and 28, and the first and second solid electrolyte layers 24 and 32 do not have any distinct boundary interface therebetween, so that the lithium-ion secondary battery 198 having advantageously increased electron conductivity and ion conductivity and an advantageously improved output density can be stably and efficiently produced with a high degree of productivity.

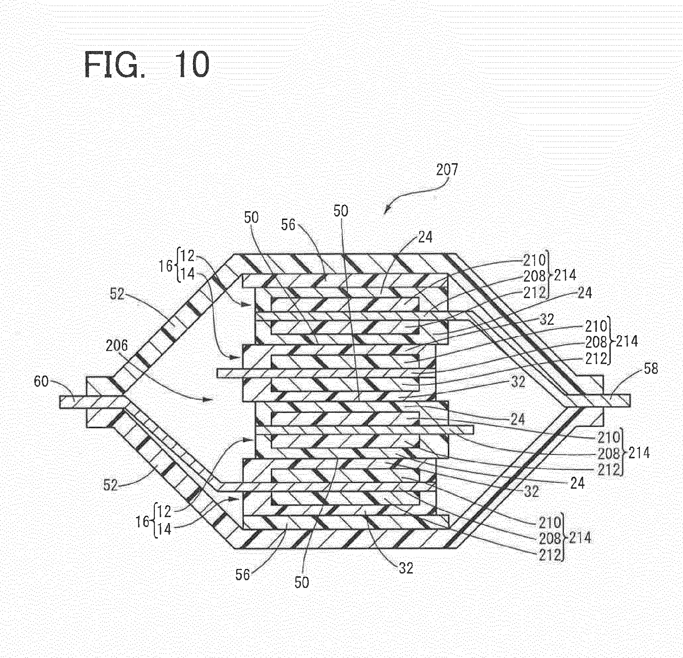

By the way, the battery cell device 54 is formed by parallel connection of the cell elements of the lithium-ion secondary battery 10, 171 or 198 in each of the preceding embodiments. In a fifth embodiment shown in Fig. 10 by way of example, however, a battery cell device 207 is formed by series connection of the cell elements of a lithium-ion secondary battery 206. Since this lithium-ion secondary battery 206 has apparently the same configuration as the lithium-ion secondary battery 171 shown in Fig. 5, the lithium-ion secondary battery 206 will be described by reference to Fig. 5.

Namely, the lithium-ion secondary battery 206 according to the present fifth embodiment is constituted by the two laminar sheets 16 which are laminated on each other and each of which consists of the first electrode sheet 12 and the second electrode sheet 14 laminated on each other, such that the lithium-ion secondary battery 206 has three cell elements, as shown in Fig. 5. Since the first electrode sheet 12 and the second electrode sheet 14 have the same structure, only the structure of the first electrode sheet 12 will be described.

Described more specifically, the first electrode sheet 12 has a bipolar electrode 214 consisting of a collector foil 208, and positive and negative electrode active substance layers 210 and 212 which are laminated integrally on the respective opposite surfaces of the collector foil 208. Further, the first solid electrolyte layer 24 is laminated integrally on one of the opposite surfaces of the positive electrode active substance layer 210 of the bipolar electrode 214, which surface is remote from the collector foil 208, while the second solid electrolyte layer 32 is laminated integrally on one of the opposite surfaces of the negative electrode active substance layer 212 of the bipolar electrode 214, which surface is remote from the collector foil 208.

The collector foil 208 of the first electrode sheet 12 is a metallic foil, which is a nickel foil in the present embodiment. However, the metallic material of the collector foil 208 is not particularly limited, and may be of any kind that can be used as a bipolar electrode, without decomposition due to an electric potential difference. That is, metallic foils formed of copper, aluminum, and alloys of those metals, other than the nickel foil may be used as the collector foil 208. Further, the collector foil 208 may consist of a plurality of metallic foil layers bonded together so as to permit electric conductivity. The metallic material of the collector foil 208 is suitably selected depending upon the kind of the positive electrode active substance 34 in the positive electrode active substance layer 210, and the kind of the negative electrode active substance 38 in the negative electrode active substance layer 212. For instance, the collector foil 208 is a clad material of copper and aluminum, or a metallic foil such as stainless steel foil, copper foil or nickel foil, where the positive electrode active substance 34 is LiCoO₂, Li(Ni-Mn-Co)O₂ (Ni of which may be partially replaced by Co or Mn), LiNiO₂, LiMn₂O₄, LiFePO₄, LiMnₓFe₁₋ₓPO₄, or any other active substance having an electric potential of about 3-5V with respect to Li, while the negative electrode active substance 38 is a natural graphite, hard carbon, carbon nano tube, carbon nano wall, mesophase carbon micro bead, mesophase carbon fiber, lithium metal, lithium·aluminum alloy, intercalated lithium compound in which lithium is intercalated in graphite or carbon, Si, alloy of Si, Sn, alloy of Sn, or any other active substance having an electric potential of about 0-1V with respect to Li. Alternatively, the collector foil 208 may be a metallic foil such as aluminum foil, titanium foil and chrominum foil, other than the clad material of copper and aluminum, stainless steel foil, copper foil and nickel foil, where the positive electrode active substance 34 is LiCoO₂, Li(Ni-Mn-Co)O₂ (Ni of which may be partially replaced by Co or Mn), LiNiO₂, LiMn₂O₄, LiFePO₄, LiMnₓFe₁₋ₓPO₄, or any other active substance having an electric potential of about 3-5V with respect to Li, while the negative electrode active substance 38 is LiTi₅O₁₂, MnO₂, an oxide of Si, an oxide of Sn, or any other active substance having an electric potential of about 1-2V with respect to Li.

The positive and negative electrode active substance layers 210 and 212, and the first and second solid electrolyte layers 24 and 32 have substantially the same structures as the positive and negative electrode active substance layers 20 and 28 and the first and second solid electrolyte layers 24 and 32 of the lithium-ion secondary battery 171 of the preceding second embodiment.

The lithium-ion secondary battery 206 having the structure described above is used as the battery cell device 207 covered by the two covering films 52, as shown in Fig. 10.

Namely, the battery cell device 207 is provided with the two protective films 56 laminated on the respective opposite end faces of the lithium-ion secondary battery 206 which are opposed to each other in the direction of lamination of the two laminar sheets 16. Further, the collector foil 208 of the first electrode sheet 12 located at one end (upper end as seen in Fig. 10) of the lithium-ion secondary battery 206 is electrically connected to the positive terminal 58 in the form of a flat sheet, while the collector foil 208 of the second electrode sheet 14 located at the other end (lower end as seen in Fig. 10) of the lithium-ion secondary battery 206 is electrically connected to the negative terminal 60 in the form of a flat sheet. Thus, the three cell elements of the lithium-ion secondary battery 206 are connected in series with each other.

A laminar body consisting of the lithium-ion secondary battery 206 and the protective films 56 is covered by the two covering films 52 such that the laminar body is sandwiched by and between the two covering films 52. In this state, the end portion of the positive terminal 58 remote from the collector foil 208, and the end portion of the negative terminal 60 remote from the collector foil 208 extend outwardly from the mutually connected end portions of the two covering films 52. Thus, the battery cell device 207 wherein the lithium-ion secondary battery 206 is covered by the covering films 52 is formed. In Fig. 10, the battery cell device 207 is shown for easier understanding of its internal structure such that a space exists between the covering films 52 and the lithium-ion secondary battery 206, as in Fig. 2. However, this space does not actually exist.

The battery cell device 207 having the structure described above is used alone, or a plurality of the battery cell devices 207 are connected in parallel or in series with each other so as to constitute a battery pack.

For instance, the lithium-ion secondary battery 206 having the structure described above is produced by using a production apparatus which is different in construction from the production apparatus 176 shown in Fig. 6, in the arrangement of the positive electrode active substance layer forming unit 88, negative electrode active substance layer forming unit 98, positive electrode vapor-deposited polymer film forming unit 180 and negative electrode vapor-deposited polymer film forming unit 184.

Described more specifically referring back to Fig. 6, the production apparatus 176 used for production of the lithium-ion secondary battery 206 is configured such that one positive electrode active substance layer forming unit 88 and one positive electrode vapor-deposited polymer film forming unit 180 are disposed such that the outlet end portion of each of the vapor supply pipes 114 and 138 is open toward the outer circumferential surface of the first feeding roller 84 (of the positive electrode sheet forming unit 74), while one negative electrode active substance layer forming unit 98 and one negative electrode vapor-deposited polymer film forming unit 184 are disposed such that the outlet end portion of each of the vapor supply pipes 114 and 138 is open toward the outer circumferential surface of the second feeding roller 86 (of the positive electrode sheet forming unit 74). Further, another positive electrode active substance layer forming unit 88 and another positive electrode vapor-deposited polymer film forming unit 180 are disposed such that the outlet end portion of each of the vapor supply pipes 114 and 138 is open toward the outer circumferential surface of the first feeding roller 94 (of the negative electrode sheet forming unit 76), while another negative electrode active substance layer forming unit 98 and another negative electrode vapor-deposited polymer film forming unit 184 are disposed such that the outlet end portion of each of the vapor supply pipes 114 and 138 is open toward the outer circumferential surface of the second feeding roller 96 (of the negative electrode sheet forming unit 76). The rolls of a tape of the collector foil 208 such as a nickel foil are installed on the first supply roller 70 and the second supply roller 72.

When the desired lithium-ion secondary battery 206 is produced by using the thus constructed production apparatus 176, the positive electrode active substance layer 210 and the first solid electrolyte layer 24 constituted by the positive electrode vapor-deposited polymer film 172 are integrally laminated on each other in this order of description on one of the opposite surfaces of the collector foil 208 by the positive electrode active substance layer forming unit 88 and the positive electrode vapor-deposited polymer film forming unit 180, while the tape of the collector foil 208 extending from the roll installed on the first supply roller 70 is moved in rolling contact with the outer circumferential surface of the first feeding roller 84.

Then, the negative electrode active substance layer 212 and the second solid electrolyte layer 32 constituted by the negative electrode vapor-deposited polymer film 174 are integrally laminated on each other in this order of description on the other surface of the collector foil 208 by the negative electrode active substance layer forming unit 98 and the negative electrode vapor-deposited polymer film forming unit 184, while the tape of the collector foil 208 fed from the first feeding roller 84 is moved in rolling contact with the outer circumferential surface of the second feeding roller 86. Thus, the first electrode sheet 12 is continuously formed.

While the first electrode sheet 12 is continuously formed, the positive electrode active substance layer 210 and the first solid electrolyte layer 24 are integrally laminated on each other in this order of description on one of the opposite surfaces of the collector foil 208 extending from the roll installed on the second supply roller 72, and the negative electrode active substance layer 212 and the second solid electrolyte layer 32 are integrally laminated on each other in this order of description on the other surface of the collector foil 208, whereby the second electrode sheet 14 is continuously formed, in substantially the same manner as the first electrode sheet 12.

Then, the first and second electrode sheets 12 and 14 are superposed or laminated on each other and wound as a roll of the laminar sheet 16, by the laminar sheet forming unit 78. Then, the roll of the laminar sheet 16 is cut in the circumferential direction, to obtain the desired lithium-ion secondary battery 206.

The lithium-ion secondary battery 206 according to the present fifth embodiment has substantially the same operational and physical advantages as in the preceding several embodiments. In particular, the present lithium-ion secondary battery 206 is configured to advantageously permit the series connection of the cell elements with each other, and efficient production thereof with a reduced size and a simple structure, so as to assure a comparatively high withstand voltage.

In the method of producing the lithium-ion secondary battery 206 according to the present fifth embodiment, too, the shut-off valves 123 provided at the corresponding outlet end portions of the vapor supply pipes 114 and 138 of the positive and negative electrode active substance layer forming units 88 and 98 are alternately opened and closed at a predetermined time interval, so that the segments of the positive electrode active substance layer 210 are laminated on one of the opposite surfaces of the tape of the collector foil 208, at the predetermined spacing interval in the longitudinal direction of the tape, while the segments of the negative electrode active substance layer 212 are laminated on the other surface of the tape, at the predetermined spacing interval in the longitudinal direction of the tape, as shown in Fig. 4. Accordingly, the electrode sheet 12 (14) can be formed such that the active-substance-free portion 61 is formed between the adjacent segments of the positive electrode active substance layer 210 and between the adjacent segments of the negative electrode active substance layer 212. Thus, the lithium-ion secondary battery 206 has substantially the same operational and physical advantages as the lithium-ion secondary battery 10 of the first embodiment which also has the active-substance-free portions 61.

The lithium-ion secondary battery 206 of this fifth embodiment may be modified such that each of the first and second solid electrolyte layers 24 and 32 consists of two layers as shown in Fig. 1. Further, the lithium-ion secondary battery 206 may be modified such that the positive-electrode-side mixture layer 200 is formed between the positive electrode active substance layer 210 and the first solid electrolyte layer 24, while the negative-electrode-side mixture layer 202 is formed between the negative electrode active substance layer 212 and the second solid electrolyte layer 32, as shown in Fig. 8.

While the embodiments of the present invention have been described above in detail, for illustrative purpose only, it is to be understood that the invention is not limited to the details of the illustrated embodiments.

The number of the laminar sheets 16 which constitute the lithium-ion secondary batteries 10, 171, 198, 206 may be suitably changed or selected.

The positive electrode collector foil 18, negative electrode collector foil 26 and collector foil 208 may have a multiplicity of through-holes filled with the positive electrode active substance 34 or negative electrode active substance 38. This modification assures an increased cell performance of the lithium-ion secondary battery.

The positive electrode collector foil 18, negative electrode collector foil 26 and collector foil 208 need not be provided with the active-substance-free portions 61 on their opposite surfaces. Namely, the positive electrode active substance layer 20, 210 and the negative electrode active substance layer 28, 212 may be formed integrally on the opposite surfaces of the positive and negative electrode collector foils 18 and 26 or the collector foil 208, so as to extend continuously in the longitudinal direction of the tapes.

Further, the powder supply pipes 122 and 148 and the gas supply pipes 120 and 144 may be disposed in parallel with the corresponding vapor supply pipes 114 and 138, as long as the positive electrode active substance 34, the negative electrode active substance 38 and the lithium-ion conductivity rendering substance 152 can be blown onto the positive and negative electrode collector foils 18 and 26, together with the vapors of the different kinds of material monomers. In this case, the outlet end portions of the powder supply pipes 122 and 148 and the gas supply pipes 120 and 144 are preferably located upstream of the outlet end portions of the vapor supply pipes 114 and 138 in the direction of feeding of the tapes of the positive and negative electrode collector foils 18 and 26 by the first and second feeding rollers 84, 94 and 86, 96, so that the positive electrode active substance 34, negative electrode active substance 38 and lithium-ion conductivity rendering substance 152 can be stably mixed with the vapors of the different kinds of material monomer, before termination of polymerization of the material monomers.

It is to be understood that the present invention may be embodied with various other changes, modifications and improvements, which may occur to those skilled in the art, without departing from the spirit and scope of the invention defined by the appended claims.

### NOMENCLATURE OF REFERENCE SIGNS

10, 171, 198, 206: Lithium-ion secondary battery
12: Positive electrode sheet 14: Negative electrode sheet
16: Laminar sheet 18: Positive electrode collector foil
20, 210: Positive electrode active substance layer
24: First solid electrolyte layer
26: Negative electrode collector foil
28, 212: Negative electrode active substance layer
32: Second solid electrolyte layer 34: Positive electrode active substance
36: Positive electrode vapor-deposited polymer film
38: Negative electrode active substance
40: Negative electrode vapor-deposited polymer film
50: Lamination boundary 61: Active-substance-free portion
208: Collector foil 214: Bipolar electrode

## Claims

1. A lithium-ion secondary battery (10, 171, 198) comprising a plurality of laminar sheets (16) each of which includes a positive electrode sheet (12) and a negative electrode sheet (14) which are laminated on each other, wherein the positive electrode sheet (12) has a positive electrode (22) in which a positive electrode active substance layer (20) in the form of a vapor-deposited polymer film (36) containing a positive electrode active substance (34) is laminated integrally on each of opposite surfaces of a positive electrode collector foil (18) in the form of a metallic foil, while a first solid electrolyte layer (24) in the form of a vapor-deposited polymer film having lithium-ion conductivity is disposed on each of opposite sides of the positive electrode (22) such that the first solid electrolyte layer (24) is laminated integrally on the corresponding positive electrode active substance layer (20), and wherein the negative electrode sheet (14) has a negative electrode (30) in which a negative electrode active substance layer (28) in the form of a vapor-deposited polymer film (40) containing a negative electrode active substance (38) is laminated integrally on each of opposite surfaces of a negative electrode collector foil (26) in the form of a metallic foil, while a second solid electrolyte layer (32) in the form of a vapor-deposited polymer film having lithium-ion conductivity is disposed on each of opposite sides of the negative electrode (30) such that the second solid electrolyte layer (32) is laminated integrally on the corresponding negative electrode active substance layer (28).

2. A lithium-ion secondary battery (206) comprising a plurality of laminar sheets (16) each including two electrode sheets which are laminated on each other and each of which has a bipolar electrode (214) in which a positive electrode active substance layer (210) in the form of a vapor-deposited polymer film containing a positive electrode active substance is laminated integrally on one of opposite surfaces of a collector foil (208) in the form of a metallic foil, while a negative electrode active substance layer (212) in the form of a vapor-deposited polymer film containing a negative electrode active substance is laminated integrally on the other of the opposite surfaces of the collector foil (208), and wherein a first solid electrolyte layer and a second solid electrolyte layer in the form of vapor-deposited polymer films each having lithium-ion conductivity are disposed on respective opposite sides of the bipolar electrode (214) such that the first solid electrolyte layer is laminated integrally on the positive electrode active substance layer (210), while the second solid electrolyte layer is laminated integrally on the negative electrode active substance layer (212).

3. A method of producing a lithium-ion secondary battery (10, 171, 198), comprising the steps of:
preparing a positive electrode collector foil (18) in the form of a metallic foil, and laminating positive electrode active substance layers (20) in the form of vapor-deposited polymer films (36) each containing a positive electrode active substance (34), integrally on respective opposite surfaces of the positive electrode collector foil (18);
laminating first solid electrolyte layers (24) in the form of vapor-deposited polymer films each having lithium-ion conductivity, on surfaces of the positive electrode active substance layers (20) remote from the positive electrode collector foil (18);
preparing a negative electrode collector foil (26) in the form of a metallic foil, and laminating negative electrode active substance layers (28) in the form of vapor-deposited polymer films (40) each containing a negative electrode active substance (38), integrally on respective opposite surfaces of the negative electrode collector foil (26);
laminating second solid electrolyte layers (32) in the form of vapor-deposited polymer films each having lithium-ion conductivity, on surfaces of the negative electrode active substance layers (28) remote from the negative electrode collector foil (26);
to thereby form a positive electrode sheet (12) in which the positive electrode active substance layers (20) are laminated integrally on the respective opposite surfaces of the positive electrode collector foil (18), and the first solid electrolyte layers (24) are_laminated integrally on the surfaces of the positive electrode active substance layers (20) remote from the positive electrode collector foil (18), and a negative electrode sheet (14) in which the negative electrode active substance layers (28) are laminated integrally on the respective opposite surfaces of the negative electrode collector foil (26), and the second solid electrolyte layers (32) are laminated integrally on the surfaces of the negative electrode active substance layers (28) remote from the negative electrode collector foil (26); and
laminating a plurality of laminar sheets (16) on each other, each of the laminar sheets (16) including the positive electrode sheet (12) and the negative electrode sheet (14) which are superposed on each other.

4. The method according to claim 3, wherein a plurality of segments of each of the positive electrode active substance layers (20) are laminated integrally on each of opposite surfaces of a tape of the positive electrode collector foil (18) such that the plurality of segments are spaced apart from each other by a predetermined spacing distance in a direction of length of the tape, to form the positive electrode sheet (12) in which each of the opposite surfaces of the positive electrode collector foil (18) is provided with active-substance-free portions (61) each formed between the adjacent segments of the positive electrode active substance layer (20), and a plurality of segments of each of the negative electrode active substance layers (28) are laminated integrally on each of opposite surfaces of a tape of the negative electrode collector foil (26) such that the plurality of segments are spaced apart from each other by the predetermined spacing distance in a direction of length of the tape of the negative electrode collector foil (26), to form the negative electrode sheet (14) in which each of the opposite surfaces of the negative electrode collector foil (26) is provided with active-substance-free portions (61) each formed between the adjacent segments of the negative electrode active substance layer (28), and wherein the positive electrode sheet (12) and the negative electrode sheet (14) are superposed on each other such that the active-substance-free portions (61) of the positive and negative electrode sheets are aligned with each other, to form a laminar body which is cut into the plurality of laminar sheets (16), at positions of the tapes of the positive and negative electrode collector foils (18, 26) corresponding to the respective active-substance-free portions (61).

5. A method of producing a lithium-ion secondary battery (206), comprising the steps of:
preparing a collector foil (208) in the form of a metallic foil;
forming a positive electrode active substance layer (210) in the form of a vapor-deposited polymer film containing a positive electrode active substance, integrally on one of opposite surfaces of the collector foil (208);
forming a negative electrode active substance layer (212) in the form of a vapor-deposited polymer film containing a negative electrode active substance, integrally on the other of the opposite surfaces of the collector foil (208);
forming a first solid electrolyte layer in the form of a vapor-deposited polymer film having lithium-ion conductivity, integrally on a surface of the positive electrode active substance layer (210) remote from the collector foil (208);
forming a second solid electrolyte layer in the form of a vapor-deposited polymer film having lithium-ion conductivity, integrally on a surface of the negative electrode active substance layer (212) remote from the collector foil (208);
to thereby form an electrode sheet in which the positive electrode active substance layer (210) and the first solid electrolyte layer are laminated integrally on said one of the opposite surfaces of the collector foil (208), while the negative electrode active substance layer (212) and the second solid electrolyte layer are laminated integrally on said other of the opposite surfaces of the collector foil (208); and
laminating a plurality of laminar sheets (16) on each other, each of the laminar sheets including two electrode sheets which are superposed on each other and each of which consists of said electrode sheet.

6. The method according to claim 5, wherein a plurality of segments of the positive electrode active substance layer (210) are laminated integrally on said one of the opposite surfaces of a tape of the collector foil (208) such that the plurality of segments are spaced apart from each other by a predetermined spacing distance in a direction of length of the tape, while a plurality of segments of the negative electrode active substance layer (212) are laminated integrally on said other of the opposite surfaces of the tape of the collector foil (208) such that the plurality of segments are spaced apart from each other by the predetermined spacing distance in the direction of length of the tape, to form said electrode sheet in which said one of the opposite surfaces of the collector foil (208) is provided with active-substance-free portions (61) each formed between the adjacent segments of the positive electrode active substance layer (210), while said other of the opposite surfaces of the collector foil (208) is provided with active-substance-free portions (61) each formed between the adjacent segments of the negative electrode active substance layer (212), and wherein said two electrode sheets are superposed on each other such that the active-substance-free portions (61) between the adjacent segments of the positive electrode active substance layer (210), and the active-substance-free portions (61) between the adjacent segments of the negative electrode active substance layer (212) are aligned with each other, to form a laminar body which is cut into the plurality of laminar sheets (16), at positions of the tape of the collector foil (208) corresponding to the respective active-substance-free portions (61).
